# EUROPEAN PATENT APPLICATION

(11) **EP 3 623 424 A1**
(43) Date of publication of application: **18.03.2020**
(21) Application number: 18865015.4
(22) Date of filing: 27.09.2018
(51) Int. Cl.: C08L 33/14, C09D 129/04, C09D 133/04, C09D 135/02, C09J 129/04, C09J 133/04, C09J 135/02

(54) **THERMOSETTING RESIN COMPOSITION**

(30) Priority: 04.10.2017 WO PCT/JP2017/036131
(71) Applicant: Kyoeisha Chemical Co., Ltd., Osaka-shi, Osaka 541-0054 (JP)
(72) Inventor: MORIWAKI, Yuya, Nara-shi Nara 630-8453 (JP); ASADA, Kosuke, Nara-shi Nara 630-8453 (JP); DONKAI, Masaru, Nara-shi Nara 630-8453 (JP); TAKENAKA, Naomi, Nara-shi Nara 630-8453 (JP)
(74) Representative: Isarpatent
(86) International application number: PCT/JP2018/035911
(87) International publication number: WO 2019/069783

(57) **Abstract**

It is an object of the present invention to provide a thermosetting resin composition using a transesterification reaction as a curing reaction, which is inexpensive and has a good curability and can be used in various applications.

A thermosetting resin composition which comprises an ester compound having two or more alkyl ester groups in a molecule (A), a compound having two or more hydroxyl groups in a molecule (B), and a transesterification catalyst (C).

## Description

### TECHNICAL FIELD

The present invention relates to a thermosetting resin composition using a transesterification reaction as curing reaction.

### BACKGROUND OF THE DISCLOSURE

In the fields of a coating and an adhesive, various thermosetting resin compositions are used. In many of such thermosetting resin compositions, a resin having two or more hydroxyl groups is used in combination with a curing agent and the resin is cured by a crosslinking reaction between the curing agent and the hydroxyl group.

As the curing agent, melamine resins, epoxy compounds, and polyisocyanate compounds are used. These curing agents are widely and generally used because the curing agents have a good thermal reactivity and cured resins obtained by using the curing agent have superior characteristics. However, the melamine resin is presumed as the cause of sick house syndrome because it generates formaldehyde, so that it has been restricted in uses. In addition, if it is used in a coating, a problem in acid resistance is known to occur because of its chemical structure.

Epoxy compounds are said to have a low storage stability and a high curing temperature, though they are high in curability and coating film properties. Polyisocyanate curing system is said to be high in cost and show a narrow range of design though they are high in curability and coating film properties. Therefore, a coating composition which has a high curability and a wide range of design to develop the desired coating film properties, and has a high storage stability and does not by-produce harmful substances is required.

Patent document 1 discloses a powder coating using a transesterification reaction as a curing reaction. However, in the present invention, it is merely described that a curing reaction by transesterification is carried out using a resin having both an ester group and a hydroxyl group, but it is not disclosed that a polyol and a curing agent having an ester group are mixed and used.

However, only the use of a powder coating is disclosed, and the use of general solvent-type or water-borne compositions is not disclosed in patent document 1. Further, if used as a coating and an adhesive agent, water resistance is required but a composition having a sufficient water resistance is not disclosed. Actually, a solvent-type coating was prepared by the method of patent document 1 and evaluated so that a sufficient water resistance or crosslinking reactivity cannot be achieved. That is, a specific method for applying the composition to a coating and an adhesive agent in the form of a solvent-type or a water-borne composition is not disclosed in patent document 1.

Patent document 2 discloses a coating using a transesterification reaction as a curing reaction. In this document, a detailed composition of the resin to be used is not restricted, and a composition which can be suitably used for a curable composition through a transesterification reaction is not identified. Also, it is characterized by using an oxirane functional group-containing catalyst epoxy compound and a catalyst comprising an inorganic cation salt, which is completely different from this case.

### PRIOR TECHNICAL DOCUMENTS

### PATENT DOCUMENTS

[Patent Document 1] Japanese Kokai Publication Hei9-59543
[Patent Document 2] Japanese Kokai Publication Hei2-147675

### SUMMARY OF INVENTION

### PROBLEMS TO BE SOLVED BY THE INVENTION

In view of the above, it is an object of the present invention to provide a thermosetting resin composition using a transesterification reaction as a curing reaction, which is inexpensive and has a good curability and can be used in various applications.

### MEANS FOR SOLVING OBJECT

The present invention relates to a thermosetting resin composition which comprises an ester compound having two or more alkyl ester groups in a molecule (A), a compound having two or more hydroxyl groups in a molecule (B), and a transesterification catalyst (C).

The ester compound (A) is preferably a compound having two or more alkyl ester groups or a homo-or copolymer of a monomer having an alkyl ester.

The ester compound (A) is preferably a t-butyl ester of carboxylic acid.

The thermosetting resin composition is preferably solventless, powdery, solvent-type, or water-borne.

The present invention relates to a cured film formed by three-dimensionally crosslinking the above-mentioned thermosetting resin composition.

### EFFECTS OF THE INVENTION

The thermosetting resin composition of the present invention is inexpensive and does not generate formaldehyde and is highly safe and can preferably be used as a new thermosetting resin composition in place of conventional isocyanate type or melamine type curing system. In addition, the resin composition may be a low temperature curable composition.

Furthermore, the ester compound (A) and the compound (B) having two or more hydroxyl groups in the molecule are used in combination so that the following effects can be obtained;
the physical properties of the coating film can be changed on the basis of the structure of the compound (B),
even if an expensive compound is used as the ester compound (A), a blending amount thereof may be lowered so that the **cost increase is unlikely to occur,**
the crosslinking density can be easily adjusted by the mixing ratio,
various performances can be easily adjusted by changing the copolymer composition and the chemical structure so that physical properties such as compatibility, crosslinking density, hardness, softness, and the like can be easily adjusted.

### BRIEF DESCRIPTION OF THE DRAWINGS

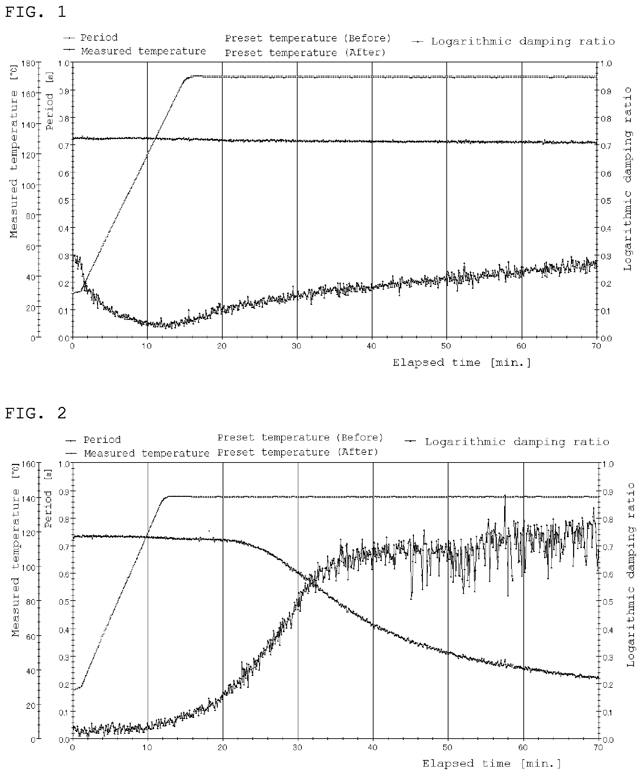

FIG. 1 is a rigid body pendulum data at 170 °C of Comparative Example 1.
FIG. 2 is a rigid body pendulum data at 140 °C of Example 5.

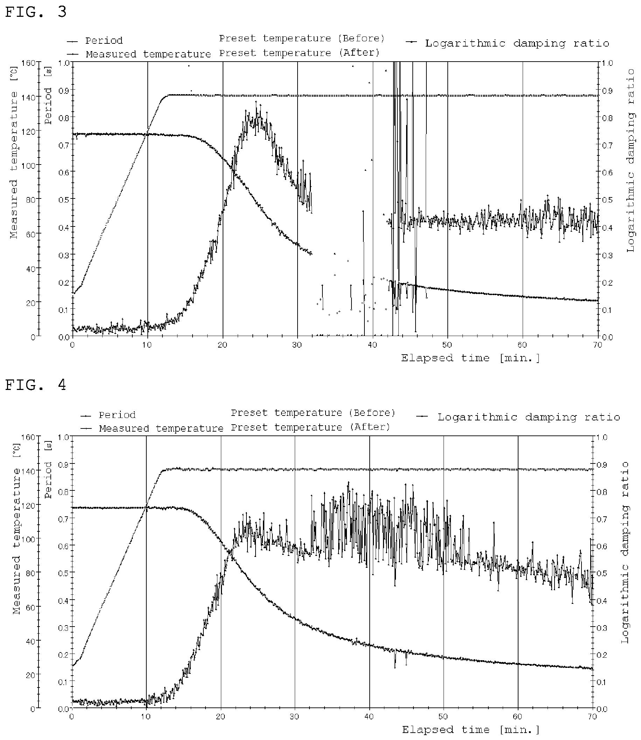

FIG. 3 is a rigid body pendulum data at 140 °C of Example 6.
FIG. 4 is a rigid body pendulum data at 140 °C of Example 7.

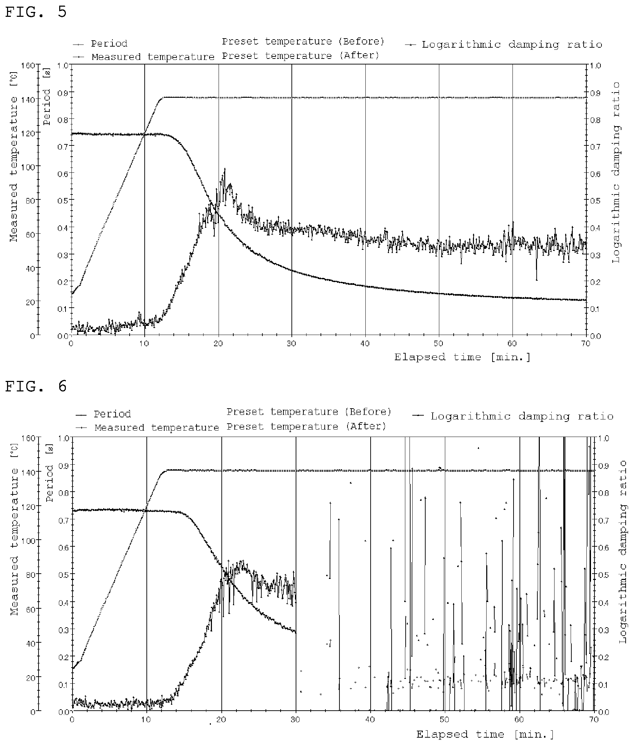

FIG. 5 is a rigid body pendulum data at 140 °C of Example 16.
FIG. 6 is a rigid body pendulum data at 140 °C of Example 20.

### DETAILED DESCRIPTION OF PREFERRED EMBODIMENTS

Hereinafter, the present invention will be described in detail.

The thermosetting resin composition of the present invention uses a combination of an ester compound (A) having two or more alkyl ester groups in the molecule and a compound (B) having two or more hydroxyl groups in the molecule, and is a resin composition to be thermally cured by a reaction occurring between these compounds. That is, by using a compound having two or more alkyl ester groups in combination with a compound having two or more hydroxyl groups in the molecule, it is cured by transesterification reaction of hydroxyl group and alkyl ester group. This transesterification reaction is shown in the following formulas 1 to 3.

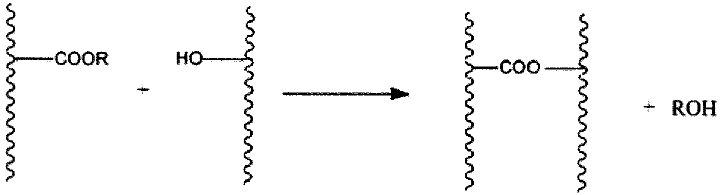

An example of a case where the ester compound (A) acts as a crosslinking agent with a relatively low molecular weight in the above reaction is as follows.

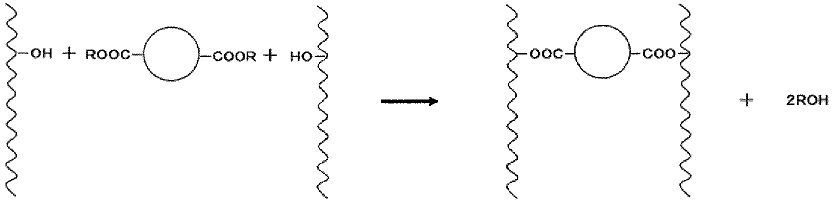

An example of the case where the compound (B) acts as a crosslinking agent with a relatively low molecular weight is as follows.

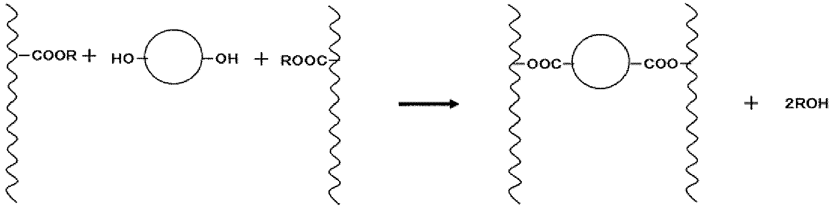

The thermosetting resin composition of the present invention is not limited to the curing reaction represented by the above-mentioned chemical formulas 1, 2, and 3, but includes those that cause an intermediate reaction between them, and is characterized by the fact that transesterification reaction occurs between the above-mentioned components (A) and (B).

In the present invention, it is important to cause a crosslinking reaction between molecules as described above. That is, a thermosetting resin composition obtained by using only a resin having an alkyl ester group and a hydroxyl group in its molecule simultaneously generates intramolecular crosslinking. That is, since both the alkyl ester group and the hydroxyl group are present in the same molecule, they are easy to approach and easily cause intramolecular reaction. However, although the intramolecular reaction causes a change in the molecular structure, it does not involve an increase in the molecular weight, so it is an undesirable reaction for curing by three-dimensional crosslinking.

In the present invention, since the alkyl ester group and the hydroxyl group are present in separate molecules, an intermolecular reaction is likely to occur, whereby a curing reaction can be efficiently generated.

In the present invention, the combination of the components (A) and (B) is not particularly limited, but it is preferred that one of the ester compound (A) and the compound (B) having two or more hydroxyl groups in the molecule (hereinafter referred to as component (X)) has a weight average molecular weight of 3,000 to 300,000 and the other (hereinafter referred to as component (Y)) has a weight average molecular weight of 50,000 or less.

The upper limit of the weight average molecular weight of the above component (X) is more preferably 100,000, further preferably 50,000, and still more preferably 30,000. The lower limit of the weight average molecular weight of the above component (X) is more preferably 3,000, and still more preferably 5,000. The upper limit of the weight average molecular weight of the above component (Y) is more preferably 50,000, preferably 30,000, and further preferably 20,000.

Furthermore, the ratio of (weight average molecular weight of the component (Y))/(weight average molecular weight of the component (X)) is more preferably 90% or less, most preferably 80% or less. In particular, when the weight molecular weight of (X) is increased, the ratio of (weight average molecular weight of the component (Y))/(weight average molecular weight of the component (X)) is preferably reduced.

That is, it is preferable that one is relatively high molecular weight and the other is relatively low molecular weight than when (A) and (B) have the same molecular weight. The above condition is preferred because the curing reaction can easily proceed efficiently. That is, when a curing reaction is caused in the present invention, it is necessary to cause intermolecular reaction as described above, and therefore, it is necessary for the alkyl ester group and the hydroxyl group to come close to each other. From this point of view, the molecular with low molecular weight can easily move and tends to approach the functional groups of the other molecule, so that a reaction tends to occur. However, both groups have high molecular weight, it becomes difficult for the functional groups in the molecule to move freely with increasing viscosity, and it is presumed that the crosslinking reaction hardly occurs.
The components of (A) and (B) will be described in detail below.

### (Ester compound (A) having two or more alkyl ester groups)

Compositions which use an ester compound (A) having two or more alkyl ester groups in combination with the compound (B) to cause curing by transesterification reaction are inexpensive, do not generate formaldehyde, are highly safe, and can generate a curing reaction efficiently. Further, in the coating composition using the conventional polyisocyanate compound or melamine resin, the above-mentioned composition is preferred because it can be used as a coating or adhesive only by replacing the curing agent with the ester compound (A).

Further, the compound having two or more alkyl ester groups in the molecule preferably has a weight average molecular weight of 100,000 or less.

As described above, in the present invention, it is used in combination with a compound containing a hydroxyl group. In this case, when a compound having a weight average molecular weight of 50,000 or less is used as the compound having an alkyl ester group, the influence of the compound (A) on the physical properties of the cured resin composition is relatively small. Therefore, when the compound (B) used in the curable resin composition using the conventional polyisocyanate or melamine resin in combination with the compound (B) having two or more hydroxyl groups is used, the performance of the obtained resin composition after curing preferably become easy to predict. The weight average molecular weight of the compound having an alkyl ester group is more preferably 50,000 or less, and still more preferably 20,000 or less. Furthermore, it can be low molecular weight materials such as 10,000 or less or 6,000 or less. For example, in the case of a polymer having a high molecular weight of 20,000 to 100,000, it is preferable from the viewpoint that the curing reaction proceeds at a smaller reaction point, and those with a low molecular weight of 20,000 or less can increase the leveling property and the crosslinking density of a coating film. Further, it is preferable because it is easy to obtain a composition with high uniformity and the viscosity increase of the paint can be suppressed even if it is blended in large amount by the action of high miscibility with the compound (B).

The thermosetting coating composition is used in many fields, but by setting the weight average molecular weight to 100,000 or less, the same compound can be preferably used in a wide range of applications. In the present specification, the weight average molecular weight is a value of the molecular weight in terms of polystyrene measured by gel permeation chromatography (GPC) according to the method described in the examples.

In the present invention, the alkyl ester group is not limited. However, it is more preferred to contain the tertiary alky ester group as a part or whole of the alkyl ester groups because the transesterification reaction tends to occur compared with the secondary alkyl ester group and the primary alkyl ester group, so that the reaction can be promptly carried out at low temperature. As the tertiary alkyl ester group, a t-butyl ester group is particularly preferable. The alkyl ester group other than tertiary is not particularly limited, and those having known ester groups such as a methyl ester group, an ethyl ester group, a benzyl ester group, an n-propyl ester group, an isopropyl ester group, an n-butyl ester group, an isobutyl ester group, and sec-butyl ester group can be used. Incidentally, it is preferable that the alkyl group has 50 or less carbon atoms. Since the alkyl group is formed as an alcohol during the transesterification reaction and is preferably volatilized, the alkyl group is more preferably one having 20 or less carbon atoms, still more preferably 10 or less. The boiling point of the alcohol volatilizing in the curing reaction is preferably 300°C or less, more preferably 200°C or less.

As the compound having two or more alkyl ester groups of the present invention, the following compounds can be used. Incidentally, the compound having two or more alkyl ester groups used in the present invention is not limited to those exemplified below.

In the following description, "(meth)acrylate" means acrylate and/or methacrylate. "(Meth)acrylic acid" means acrylic acid and/or methacrylic acid. "(Meth)acryloyl" means acryloyl and/or methacryloyl. "(Meth)acrylamide" means acrylamide and/or methacrylamide.

### (Polymer composed of a monomer having an alkyl ester group and a polymerizable unsaturated bond as a part or the whole of the structural unit) (A-1)

Such a polymer is preferable because a compound having two or more alkyl ester groups in the molecule can be obtained at low cost with a general-purpose material. As the above-mentioned monomer having an alkyl ester group and a polymerizable unsaturated bond, a great many kinds of compounds are known, but typically, compounds represented by the following general formula can be mentioned. 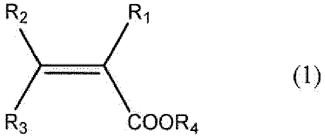 (In the formula, R₁, R₂ and R₃ represent hydrogen, an alkyl group, a carboxyl group, or an alkyl ester group, and R₄ represents a hydrocarbon group having 50 or less carbon atoms.)

Such a compound represented by the general formula (1) may be an ester derivative of a known unsaturated carboxylic acid such as (meth)acrylic acid, crotonic acid, itaconic acid, maleic acid or fumaric acid.

The most typical example of the monomer having an alkyl ester group and a polymerizable unsaturated bond represented by the general formula (1) is an ester of (meth)acrylic acid and an alcohol, and examples thereof include methyl (meth)acrylate, ethyl (meth)acrylate, n-propyl (meth)acrylate, benzyl (meth)acrylate, isopropyl (meth)acrylate, n-butyl (meth)acrylate, isobutyl (meth)acrylate, sec-butyl (meth)acrylate, and t-butyl (meth)acrylate.

Among them, a tertiary alkyl ester such as t-butyl (meth)acrylate is most preferable from the viewpoint of reactivity of crosslinking.

Since t-butyl (meth)acrylate is an ester of tertiary alkyl, the transesterification reaction rate is fast, and therefore the curing reaction proceeds efficiently. Therefore, it is a very preferable raw material, which is superior in crosslinking reactivity to the primary alkyl ester or the secondary alkyl ester, for donating an ester group to achieve the object of the present invention.

On the other hand, t-butyl (meth)acrylate has a high Tg, and the resin containing it as a raw material is hard. Therefore, it was conventionally thought that it is not necessarily preferable as a material for coating for obtaining thin film formability and low temperature curability.

In the present invention, since it is used in combination with the compound (B) to form a thermosetting resin composition, even a homopolymer of t-butyl (meth)acrylate which is inherently unsuitable for thin film formability and low temperature curability can preferably be used without causing the problems as described above by the action of the compound (B) having two or more hydroxyl groups in the molecule to be used in combination.

Also, Tg may be adjusted by copolymerizing t-butyl (meth)acrylate with other monomers described in detail below. In this case, it is preferable to set Tg at 80°C or lower.

In addition to the compound represented by the general formula (1), the monomer having an alkyl ester group and a polymerizable unsaturated bond may be a compound in which a polymerizable unsaturated bond and an ester group are bonded via a linking group. As such a monomer, those represented by the following general formula can be used. 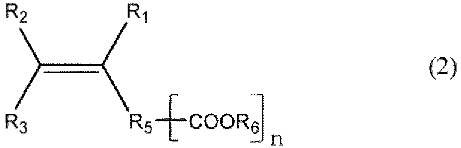 n: 1 to 10
In the formula, R₁, R₂ and R₃ are the same or different and each is hydrogen, an alkyl group, a carboxyl group, an alkyl ester group or a structure represented by the following R₅-[COOR₆].
(R₅ is aliphatic, alicyclic or aromatic alkylene group with a number of atoms of 50 or less in the main chain, which may have one or more functional groups selected from the group consisting of an ester group, an ether group, an amide group, and a urethane and may have a side chain. R₆ is an alkyl group having 50 or less carbon atoms.)
In this structure, an alkyl ester group is present from the acrylic resin main chain via a linking group. Preferred aspects of such a structure will be described in detail below.

More specifically, as the structure represented by the general formula (2), those represented by the following formula can be exemplified. 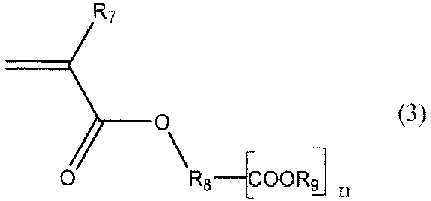 n: 1 to 10
(Wherein R₇ is H or methyl group.
R 8 is an alkylene group with a number of atoms of 48 or less in the main chain, which may have an ester group, an ether group and/or an amide group in the main chain, and may have a side chain.
Rg is an alkyl group having 50 or less carbon atoms.)
Such a compound is a derivative of (meth)acrylic acid and can be obtained by a known synthesis method using (meth)acrylic acid as a raw material.

The number of atoms in the main chain of R₈ is more preferably 40 or less, still more preferably 30 or less, and further more preferably 20 or less. The atom that may be contained in the main chain of R₂ is not particularly limited, and an oxygen atom, a nitrogen atom, a sulfur atom, a silicon atom and the like in addition to the carbon atom may be contained. More specifically, in the main chain of R₈, an ether group, an ester group, an amino group, an amide group, a thioether group, a sulfonate group, a thioester group, a siloxane group, etc. in addition to an alkyl group may be used.

Such a compound in which (meth)acrylic acid and an ester group are bonded via a linking group represented by R 8 is preferable, in particular, because the reaction rate of the transesterification tends to increase. The reason why the reaction rate becomes fast is that if the side chain structure is a long chain and the ester group is present at the terminal thereof, the ester group is easy to move and the degree of freedom becomes large, so that the ester group is easily accessible to the hydroxyl group, thereby the reaction is accelerated. This is likewise promoted for the compound (B) having two or more hydroxyl groups in the molecule.

Also in the compounds represented by the general formulas (2) to (3), it is preferable to use a tertiary alkyl group (for example, t-butyl group) for R₉ because the reaction rate of transesterification is the faster.

Examples of specific structures of the compounds represented by the general formulas (2) to (3) are shown below. 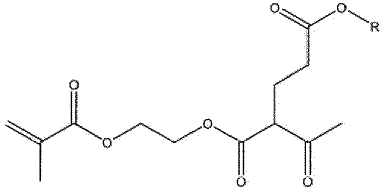 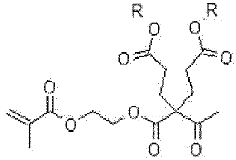 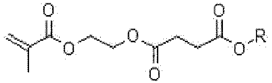 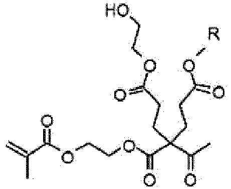 In the formula, R represents an alkyl group.

A polymer obtained by homopolymerizing one or two or more kinds of such acrylic monomers having an alkyl ester group or copolymerizing them with other monomers can be used in the present invention.

In the case of using the copolymerization of the acrylic monomer having an alkyl ester group, the monomer to be used in combination is not particularly limited, and may include;
various α-olefins such as ethylene, propylene, or butane-1; various halogenated olefins except fluoroolefin such as vinyl chloride or vinylidene chloride,
(meth)acrylates having 1 to 18 carbon atoms, such as various alkyl (meth)acrylates as well as various cycloalkyl (meth)acrylates, aralkyl (meth)acrylates, phenyl (meth)acrylates or substituted phenyl group-containing (meth)acrylate;
various aromatic vinyl compounds such as styrene, α-methylstyrene or vinyltoluene;
various amino group-containing amide unsaturated monomers such as N-dimethylaminoethyl (meth)acrylamide, N-diethylaminoethyl (meth)acrylamide, N-dimethylaminopropyl (meth)acrylamide or N-diethylaminopropyl (meth)acrylamide; various dialkylaminoalkyl (meth)acrylates such as dimethylaminoethyl (meth)acrylate or diethylaminoethyl (meth)acrylate;
various amino group-containing monomers such as tert-butylaminoethyl (meth)acrylate, tert-butylaminopropyl (meth)acrylate, aziridinyl ethyl (meth)acrylate, pyrrolidinylethyl (meth)acrylate or piperidinylethyl(meth)acrylate;
various carboxyl group-containing monomers such as (meth)acrylic acid, crotonic acid, itaconic acid, maleic acid or fumaric acid;
various epoxy group-containing monomers such as glycidyl (meth)acrylate, β-methylglycidyl (meth)acrylate or (meth)allyl glycidyl ether;
mono- or diesters of various α, β-unsaturated dicarboxylic acids such as maleic acid, fumaric acid or itaconic acid with monohydric alcohols having 1 to 18 carbon atoms;
various hydrolyzable silyl group-containing monomers such as vinyltrimethoxysilane, vinyltriethoxysilane, vinyltripropoxysilane, vinylmethyldiethoxysilane, vinyltris(β-methoxyethoxy) silane, allyltrimethoxysilane, trimethoxysilylethyl vinyl ether, triethoxysilylethyl vinyl ether, methyldimethoxysilyl ethyl vinyl ether, trimethoxysilylpropyl vinyl ether, triethoxysilylpropyl vinyl ether, methyldiethoxysilylpropyl vinyl ether, γ-(meth)acryloyloxypropyltrimethoxysilane, γ-(meth)acryloyloxypropyltriethoxysilane or γ-(meta)acryloyloxypropylmethyldimethoxysilane; various fluorine-containing α-olefins such as vinyl fluoride, vinylidene fluoride, trifluoroethylene, tetrafluoroethylene, chlorotrifluoroethylene, bromotrifluoroethylene, pentafluoropropylene or hexafluoropropylene;
various fluorine atom-containing monomers such as various perfluoroalkyl perfluorovinyl ether or (per) fluoroalkyl vinyl ether (provided that the alkyl group has 1 to 18 carbon atoms) including trifluoro methyl trifluorovinyl ether, pentafluoroethyl trifluorovinyl ether or heptafluoropropyl trifluorovinyl ether;
epoxy group-containing monomers such as glycidyl (meth)acrylate, β-methylglycidyl (meth)acrylate, 3,4-epoxycyclohexylmethyl (meth)acrylate, 3,4-epoxycyclohexylethyl (meth)acrylate, 3,4-epoxycyclohexylpropyl (meth)acrylate, or allyl glycidyl ether,
various alkyl vinyl ethers or substituted alkyl vinyl ethers such as methyl vinyl ether, ethyl vinyl ether, n-propyl vinyl ether, isopropyl vinyl ether, n-butyl vinyl ether, isobutyl vinyl ether, tert-butyl vinyl ether, n-pentyl vinyl ether, n-hexyl vinyl ether, n-octyl vinyl ether, 2-ethylhexyl vinyl ether, chloromethyl vinyl ether, chloroethyl vinyl ether, benzyl vinyl ether or phenylethyl vinyl ether,
various cycloalkyl vinyl ethers such as cyclopentyl vinyl ether, cyclohexyl vinyl ether or methyl cyclohexyl vinyl ether;
various aliphatic carboxylic acid vinyls such as vinyl 2,2-dimethyl propanoate, vinyl 2,2-dimethyl butanoate, vinyl 2,2-dimethyl pentanoate, vinyl 2,2-dimethyl hexanoate, vinyl 2-ethyl-2-methyl butanoate, vinyl 2-ethyl-2-methyl pentanoate, vinyl 3-chloro-2,2-dimethyl propanoate and the like, as well as vinyl acetate, vinyl propionate, vinyl butyrate, vinyl isobutyrate, vinyl caproate, vinyl caprylate, vinyl caprate or vinyl laurate, C9 branched aliphatic carboxylic acid vinyl, C10 branched aliphatic carboxylic acid vinyl, C11 branched aliphatic carboxylic acid vinyl or vinyl stearate;
vinyl esters of carboxylic acids having a cyclic structure such as vinyl cyclohexane carboxylate, vinyl methyl cyclohexane carboxylate, vinyl benzoate or vinyl p-tert-butylbenzoate.

In the polymer composed of the (meth)acrylate of the alkyl as a part or the whole of the structural unit, the phrase "having two or more alkyl ester groups" means that the number of alkyl ester groups per one molecular weight, which is calculated from the weight average molecular weight and the alkyl ester group equivalent is 2 or more.

That is, in the case of a polymer, the number of (meth)acrylates of alkyl per molecule varies, but it is necessary that the average value thereof is 2 or more. This value is more preferably 2.2 or more, most preferably 2.3 or more.

Copolymerization of the (meth)acrylate of the above alkyl may be carried out using a hydroxyl group-containing vinyl monomer, or may not contain a hydroxyl group. Representative examples of such hydroxyl group-containing vinyl monomers are exemplified below;
various hydroxyl group-containing vinyl ethers such as 2-hydroxyethyl vinyl ether, 3-hydroxypropyl vinyl ether, 2-hydroxypropyl vinyl ether, 4-hydroxybutyl vinyl ether, 3-hydroxybutyl vinyl ether, 2-hydroxy-2-methylpropyl vinyl ether, 5-hydroxypentyl vinyl ether or 6-hydroxyhexyl vinyl ether;
addition reaction products of these various vinyl ethers and ε-caprolactone;
various hydroxyl group-containing allyl ethers such as 2-hydroxyethyl (meth)allyl ether, 3-hydroxypropyl (meth)allyl ether, 2-hydroxypropyl (meth)allyl ether, 4-hydroxybutyl (meth)allyl ether, 3-hydroxybutyl (meth)allyl ether, 2-hydroxy-2-methylpropyl (meth)allyl ether, 5-hydroxypentyl (meth)allyl ether or 6-hydroxyhexyl (meth)allyl ether; addition reaction products of these various allyl ethers and ε-caprolactone;
various hydroxyl group-containing (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4- hydroxybutyl (meth)acrylate, polyethylene glycol mono (meth)acrylate, or polypropylene glycol mono (meth)acrylate; and
main components of addition reaction of these various (meth)acrylates and ε-caprolactone.

A method for producing (A-1) is not particularly limited, and (A-1) can be produced by polymerization by a known method. More specifically, mention may be made of polymerization methods such as a solution polymerization method in an organic solvent, an emulsion polymerization method in water, a miniemulsion polymerization method in water, an aqueous solution polymerization method, a suspension polymerization method, a UV curing method, and the like.

Further, it may be water-borne one obtained by dispersing a polymer in water after a solution polymerization in an organic solvent is carried out, or may be one obtained by dissolving a resin, which is obtained by polymerization in water, in an organic solvent.

### (A-2) (A compound obtained by addition reaction of a malonic acid ester with a vinyl group)

A compound obtained by addition reaction of a malonic acid ester with a vinyl group can also be used as the ester compound (A) of the present invention. Such a reaction can be represented by the following general formula.

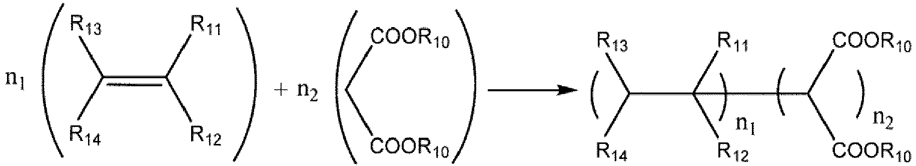

In the above general formula, R₁₀ represents an alkyl group having 50 or less carbon atoms.
n₁ is 1 to 10. n₂ is 1 to 20.
R₁₁, R₁₂, R₁₃, and R₁₄ are not particularly limited, and any functional group can be used depending on the purpose. More specifically, H, an alkyl group with C1 to 20, a carboxyl group, an ester group, a hydroxyl group, an amine group, an amide group, an epoxy group, a urethane group, a silane group, an ethylene glycol group, and a phenoxy group may be contained, and one or more vinyl groups via an optional linking group may be contained.
Generally, (meth)acrylate derivatives, polyvalent (meth)acrylate derivatives and the like can be exemplified. In the case of the compound having a malonic acid ester structure as well, it is most preferable that the alkyl group in the ester group is a tertiary alkyl group such as t-butyl group. By using a tertiary alkyl group, it is preferable in that the transesterification reaction proceeds efficiently.

The compound (A-2) obtained by the addition reaction of the malonic acid ester with a vinyl group may be one having one or more skeletons derived from the malonic acid ester in one molecule, which is obtained by using a compound having one or more unsaturated bonds in one molecule as a raw material.

Many other compounds having a structure derived from a malonic acid ester are known, but the compound having the above structure is particularly preferred because it can promote the addition reaction of malonic acid ester with vinyl group and can be easily synthesized, and the ester group number can be adjusted by selecting the starting raw material so that the curing performances and the resin performances after curing can be easily adjusted.

Examples of such compounds are shown below. 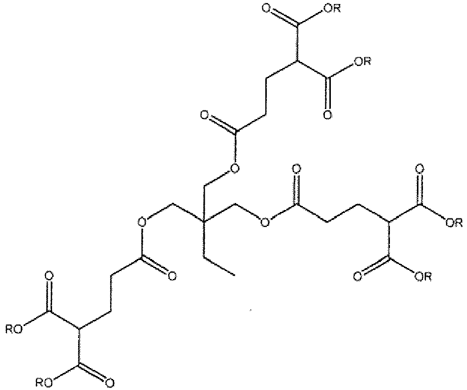 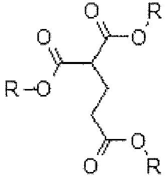 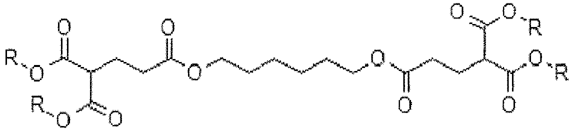 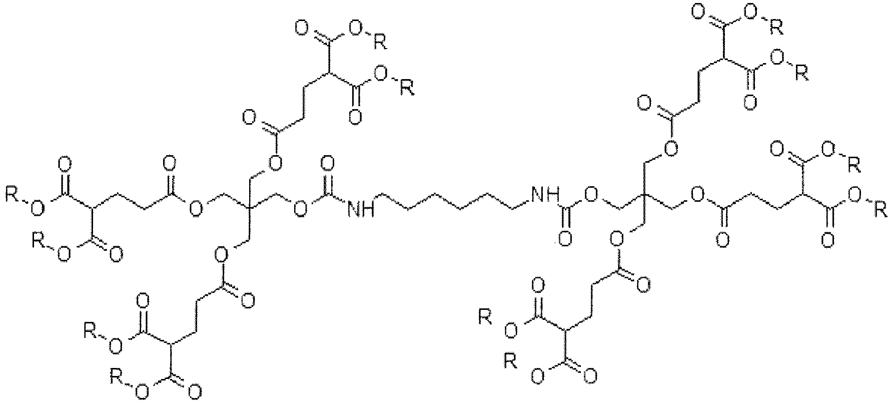 In the formula, R represents an alkyl group.

### (Alkyl ester of polyfunctional carboxylic acid) (A-3)

A compound obtained by reacting a polyfunctional carboxylic acid with an alcohol can also be used as the ester compound (A) of the present invention. Such a reaction can be represented by the following general formula.

R-(COOH)n₃ + n₄ HO-R₁₅ → R-(COOR₁₅)_{n₃} + n₄ H₂O

Various polyfunctional carboxylic acids are general purpose raw materials widely and inexpensively provided in many applications such as polyester raw materials, polyamide raw materials, neutralizing agents, synthetic raw materials and the like. Compounds obtained by alkyl esterification of such polyfunctional carboxylic acids by a known method can also be used in the present invention. The esterification can be carried out by the above-mentioned alkyl group having 50 or less carbon atoms, and in particular, one esterified with a tertiary alkyl group such as t-butyl group is preferable.

When such a compound is used as the ester compound (A), it can be esterified inexpensively by a known method and a polyvalent ester group can be introduced with a relatively low molecular weight. Further, by esterification, the compatibility with an organic solvent is improved, so that it can suitably be used.

The polyfunctional carboxylic acid to be used here is not particularly limited and, for example, one having a carbon number of 50 or less can be used.
More specifically, the following compounds can be mentioned;
aliphatic polyvalent carboxylic acids such as malonic acid, succinic acid, glutaric acid, adipic acid, pimelic acid, suberic acid, azelaic acid, sebacic acid, undecanedioic acid, dodecanedioic acid, brassylic acid, octadecanedioic acid, citric acid, butanetetracarboxylic acid and the like; alicyclic polyvalent carboxylic acids such as 1,2-cyclohexane dicarboxylic acid, 1,3-cyclohexane dicarboxylic acid, 1,4-cyclohexane dicarboxylic acid, 4-cyclohexene-1,2-dicarboxylic acid, 3-methyl-1,2-cyclohexane dicarboxylic acid, 4-methyl-1,2-cyclohexane dicarboxylic acid, 1,2,4-cyclohexane tricarboxylic acid, 1,3,5-cyclohexane tricarboxylic acid and the like;
aromatic polyvalent carboxylic acids such as phthalic acid, isophthalic acid, terephthalic acid, naphthalene dicarboxylic acid, 4,4'-biphenyl dicarboxylic acid, trimellitic acid, pyromellitic acid and the like;
fatty acids such as coconut oil fatty acid, cottonseed oil fatty acid, hemp oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid, safflower oil fatty acid, and the like; monocarboxylic acids such as lauric acid, myristic acid, palmitic acid, stearic acid, oleic acid, linoleic acid, linolenic acid, benzoic acid, p-tert-butylbenzoic acid, cyclohexanoic acid, 10-phenyloctadecanoic acid and the like; and
hydroxycarboxylic acids such as lactic acid, 3-hydroxybutanoic acid, 3-hydroxy-4-ethoxybenzoic acid and the like.

In the present invention, the compound having two or more alkyl ester groups described above may be used in combination. Further, acid anhydrides of these compounds may be used as raw materials.

In the present invention, a method of alkyl esterification of the polyfunctional carboxylic acid is not particularly limited, and a known method such as dehydration condensation with alcohol can be applied.

The ester compound (A) corresponding to the above (A-3) preferably has a molecular weight of 10,000 or less. It is preferable in view of the fact that molecules are easy to move and curing progresses. The molecular weight can be made lower molecular weight such as 6,000 or less, 4000 or less, and 2000 or less.

### The compound having two or more hydroxyl groups in the molecule (B)

In the thermosetting resin composition of the present invention, in addition to the ester compound (A) which is a compound having two or more alkyl ester groups described above, the compound (B) having two or more hydroxyl groups in the molecule is contained. Thereby, a reaction between the compound (B) having two or more hydroxyl groups in the molecule and the above-mentioned ester compound (A) is caused to cure the coating film efficiently.

Such compound (B) is not particularly limited, and examples thereof include acryl polyol, polyester polyol, polyether polyol, polycarbonate polyol, polyurethane polyol, and the like. Two or more of them may be used at the same time.
Further, it is also possible to use a low molecular weight polyol having a small molecular weight.

Among these, it is particularly preferable to use an acrylic polyol and/or a polyester polyol.

As the acrylic polyol and/or polyester polyol used here, resins widely used in the field of coatings can be used.

These will be described in detail below.

### Acrylic polyol (B-1)

The acrylic polyol is produced, for example, by copolymerizing a hydroxyl group-containing polymerizable unsaturated monomer (b₁) and other polymerizable unsaturated monomer (b₂) copolymerizable with the above (b₁) by a known method. More specifically, there can be mentioned a polymerization method such as a solution polymerization method in an organic solvent, an emulsion polymerization method in water, a miniemulsion polymerization method in water, an aqueous solution polymerization method, or the like.

The hydroxyl group-containing polymerizable unsaturated monomer (b₁) is a compound having one or more hydroxyl groups and polymerizable unsaturated bonds respectively in one molecule. The hydroxyl group-containing polymerizable unsaturated monomer (b₁) is not particularly limited.
Representative examples of such hydroxyl group-containing vinyl monomers are exemplified below;
various hydroxyl group-containing vinyl ethers such as 2-hydroxyethyl vinyl ether, 3-hydroxypropyl vinyl ether, 2-hydroxypropyl vinyl ether, 4-hydroxybutyl vinyl ether, 3-hydroxybutyl vinyl ether, 2-hydroxy-2-methylpropyl vinyl ether, 5-hydroxypentyl vinyl ether or 6-hydroxyhexyl vinyl ether;
addition reaction products of these various vinyl ethers and ε-caprolactone;
various hydroxyl group-containing (meth)allyl ethers such as 2-hydroxyethyl (meth)allyl ether, 3-hydroxypropyl (meth)allyl ether, 2-hydroxypropyl (meth)allyl ether, 4-hydroxybutyl (meth)allyl ether, 3-hydroxybutyl (meth)allyl ether, 2-hydroxy-2-methylpropyl (meth)allyl ether, 5-hydroxypentyl (meth)allyl ether or 6-hydroxyhexyl (meth)allyl ether;
addition reaction products of these various allyl ethers and ε-caprolactone;
various hydroxyl group-containing (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, polyethylene glycol mono (meth)acrylate or polypropylene glycol mono (meth)acrylate; or main components of addition reaction of these various (meth)acrylates and ε-caprolactone.

Examples of the other polymerizable unsaturated monomer (b₂) copolymerizable with the hydroxyl group-containing polymerizable unsaturated monomer (b₁) include the following monomers (i) to (xix), and the like, and any combination thereof.

(i) Alkyl or cycloalkyl (meth)acrylate:
   methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-hexyl (meth)acrylate, n-octyl (meth)acrylate, 2-ethylhexyl (meth)acrylate, nonyl (meth)acrylate, tridecyl (meth)acrylate, lauryl (meth)acrylate, stearyl (meth)acrylate, isostearyl (meth)acrylate, cyclohexyl (meth)acrylate, methylcyclohexyl (meth)acrylate, tert-butylcyclohexyl (meth)acrylate, cyclododecyl (meth)acrylate, tricyclodecanyl (meth)acrylate, etc.
(ii) Polymerizable unsaturated monomer having an isobornyl group:
   isobornyl (meth)acrylate, etc.
(iii) Polymerizable unsaturated monomer having an adamantyl group:
   adamantyl (meth)acrylate, etc.
(iv) Polymerizable unsaturated monomer having a tricyclodecenyl group:
   tricyclodecenyl (meth)acrylate, etc.
(v) Aromatic ring-containing polymerizable unsaturated monomer:
   benzyl (meth)acrylate, styrene, α-methylstyrene, vinyltoluene, etc.
(vi) Polymerizable unsaturated monomer having an alkoxysilyl group:
   vinyltrimethoxysilane, vinyltriethoxysilane, vinyltris(2-methoxyethoxy) silane, γ-(meth)acryloyloxypropyltrimethoxysilane, γ-(meth)acryloyloxypropyltriethoxysilane, etc.
(vii) Polymerizable unsaturated monomer having a fluorinated alkyl group:
   perfluoroalkyl (meth)acrylates such as perfluorobutyl ethyl (meth)acrylate and perfluorooctylethyl (meth)acrylate; fluoroolefins, etc.
(viii) Polymerizable unsaturated monomer having a photopolymerizable functional group such as a maleimide group.
(ix) Vinyl compound:
   N-vinyl pyrrolidone, ethylene, butadiene, chloroprene, vinyl propionate, vinyl acetate etc.
(x) Carboxyl group-containing polymerizable unsaturated monomer:
   (meth)acrylic acid, maleic acid, crotonic acid, β-carboxyethyl acrylate, etc.
(xi) Nitrogen-containing polymerizable unsaturated monomer: (meth)acrylonitrile, (meth)acrylamide, N, N-dimethylaminoethyl (meth)acrylate, N, N-diethylaminoethyl (meth)acrylate, N, N-dimethylaminopropyl (meth)acrylamide, methylene bis (meth)acrylamide, ethylenebis (meth)acrylamide, adducts of glycidyl (meth)acrylate and an amine compound, etc.
(xii) Polymerizable unsaturated monomer having two or more polymerizable unsaturated groups in one molecule: allyl (meth)acrylate, 1,6-hexanediol di(meth)acrylate, etc.
(xiii) Epoxy group-containing polymerizable unsaturated monomer:
   glycidyl (meth)acrylate, β-methylglycidyl (meth)acrylate, 3,4-epoxycyclohexylmethyl (meth)acrylate, 3,4-epoxycyclohexylethyl (meth)acrylate, 3,4-epoxycyclohexylpropyl (meth)acrylate, allyl glycidyl ether, etc.
(xiv) (Meth)acrylate having a polyoxyethylene chain whose molecular terminal is an alkoxy group:
(xv) Polymerizable unsaturated monomer having a sulfonic acid group:
   2-acrylamido-2-methylpropanesulfonic acid, 2-sulfoethyl (meth)acrylate, allylsulfonic acid, 4-styrenesulfonic acid and the like; sodium salts and ammonium salts etc. of these sulfonic acids.
(xvi) Polymerizable unsaturated monomer having a phosphoric acid group:
   acid phosphoxyethyl (meth)acrylate, acid phosphoxypropyl (meth)acrylate, acid phosphoxy poly(oxyethylene)glycol (meth)acrylate, acid phosphoxy poly (oxypropylene)glycol (meth)acrylate, etc.
(xvii) Polymerizable unsaturated monomer having an ultraviolet absorbing functional group:
   2-hydroxy-4-(3-methacryloyloxy-2-hydroxypropoxy) benzophenone, 2-hydroxy-4-(3-acryloyloxy-2-hydroxypropoxy) benzophenone, 2,2'-dihydroxy-4-(3-methacryloyloxy-2-hydroxypropoxy) benzophenone, 2,2'-dihydroxy-4-(3-acryloyloxy-2-hydroxypropoxy) benzophenone, 2-(2'-hydroxy-5'-methacryloyloxyethylphenyl)-2H-benzotriazole, etc.
(xviii) Ultraviolet stable polymerizable unsaturated monomer:
   4-(meth)acryloyloxy-1,2,2,6,6-pentamethylpiperidine, 4-(meth)acryloyloxy-2,2,6,6-tetramethylpiperidine, 4-cyano-4-(meth)acryloylamino-2,2,6,6-tetramethylpiperidine, 1-(meth)acryloyl-4-(meth)acryloylamino-2,2,6,6-tetramethylpiperidine, 1-(meth)acryloyl-4-cyano-4-(meth)acryloylamino-2,2,6,6-tetramethylpiperidine, 4-crotonoyloxy-2,2,6,6-tetramethylpiperidine, 4-crotonoylamino-2,2,6,6-tetramethylpiperidine, 1-crotonoyl-4-crotonoyloxy-2,2,6,6-tetramethylpiperidine and the like.
(xix) Polymerizable unsaturated monomer having a carbonyl group:
   acrolein, diacetone acrylamide, diacetone methacrylamide, acetoacetoxyethyl methacrylate, formylstyrene, vinyl alkyl ketone having about 4 to about 7 carbon atoms (for example, vinyl methyl ketone, vinyl ethyl ketone, vinyl butyl ketone), and etc.

In the present specification, "polymerizable unsaturated group" means an unsaturated group capable of radical polymerization or ionic polymerization. Examples of the polymerizable unsaturated group include a vinyl group and a (meth)acryloyl group.

The proportion of the hydroxyl group-containing polymerizable unsaturated monomer (b₁) in preparing the acrylic polyol (B-1) is preferably 0.5 to 50% by weight based on the total amount of the monomer components. Within such a range, an appropriate crosslinking reaction can be caused, and excellent coating film physical properties can be obtained.
The lower limit is more preferably 1.0% by weight, and still more preferably 1.5% by weight. The upper limit is more preferably 40% by weight.

The hydroxyl value of the acrylic polyol (B-1) is preferably 1 to 200 mg KOH/g from the viewpoint of water resistance of the formed coating film and the like. The lower limit is more preferably 2 mg KOH/g, and still more preferably 5 mg KOH/g. The upper limit is more preferably 180 mg KOH/g, and still more preferably 170 mg KOH/g.

As the acrylic polyol (B-1), commercially available one can also be used. Commercial ones are not particularly limited, and for example, ACRYDIC A-801-P, A-817, A-837, A-848-RN, A-814, 57-773, A-829, 55-129, 49-394-IM, A-875-55, A-870, A-871, A- 859-B, 52-668-BA, WZU-591, WXU-880, BL-616, CL-1000, CL-408, and the like manufactured by DIC Corporation.

In the thermosetting coating of the present invention, the ester group in the ester compound (A) is preferably 1 to 200% (number ratio) relative to the number of hydroxyl groups derived from the acrylic polyol (B-1) when the ester group is a tertiary ester, although it can be blended arbitrarily.

### Polyester polyol (B-2)

The polyester polyol (B-2) can usually be produced by an esterification reaction or a transesterification reaction of an acid component and an alcohol component. As the above-mentioned acid component, a compound which is ordinarily used as an acid component in the production of a polyester resin can be mentioned. Examples of the acid component include aliphatic polybasic acids, alicyclic polybasic acids, aromatic polybasic acids and the like, and anhydrides and esterified products thereof.

As the above aliphatic polybasic acid, and anhydride and esterified product thereof, aliphatic compounds having two or more carboxyl groups in one molecule, an acid anhydride of the aliphatic compound and an esterified product of the aliphatic compound are generally mentioned, for example, aliphatic polyvalent carboxylic acids such as succinic acid, glutaric acid, adipic acid, pimelic acid, suberic acid, azelaic acid, sebacic acid, undecane diacid, dodecanedioic acid, brassylic acid, octadecanedioic acid, citric acid, and butanetetracarboxylic acid; anhydrides of the above aliphatic polyvalent carboxylic acids;
esterified products of lower alkyl having about 1 to about 4 carbon atoms of the aliphatic polyvalent carboxylic acid, and the like, and any combinations thereof may be mentioned.

The aliphatic polybasic acid is preferably adipic acid and/or adipic anhydride from the viewpoint of the smoothness of the coating film to be obtained.

The above-mentioned alicyclic polybasic acids, and their anhydrides and esterified products are generally compounds having one or more alicyclic structures and two or more carboxyl groups in one molecule, acid anhydrides of the above compounds and esterified products of the above compounds. The alicyclic structure is mainly a 4- to 6-membered ring structure. Examples of the alicyclic polybasic acid and anhydride and esterified product thereof include the alicyclic polyvalent carboxylic acids such as 1,2-cyclohexanedicarboxylic acid, 1,3-cyclohexanedicarboxylic acid, 1,4-cyclohexanedicarboxylic acid, 4-cyclohexene-1, 2-dicarboxylic acid, 3-methyl-1,2-cyclohexanedicarboxylic acid, 4-methyl-1,2-cyclohexanedicarboxylic acid, 1,2,4-cyclohexanetricarboxylic acid, 1,3,5-cyclohexanetricarboxylic acid and the like; anhydrides of the alicyclic polyvalent carboxylic acids; esterified products of the lower alkyl having about 1 to about 4 carbon atoms of the alicyclic polyvalent carboxylic acid, and the like; and any combinations thereof may be mentioned.

From the viewpoint of the smoothness of the coating film to be obtained, it is preferable to use 1,2-cyclohexanedicarboxylic acid, 1,2-cyclohexanedicarboxylic anhydride, 1,3-cyclohexanedicarboxylic acid, 1,4-cyclohexanedicarboxylic acid, 4-cyclohexene-1,2-dicarboxylic acid and 4-cyclohexene-1,2-dicarboxylic anhydride, and 1,2-cyclohexane dicarboxylic acid and/or 1,2-cyclohexanedicarboxylic anhydride is more preferable.

The above aromatic polybasic acid and their anhydride and esterified product may generally include aromatic polyvalent carboxylic acids such as an aromatic compound having two or more carboxyl groups in one molecule, an acid anhydride of the aromatic compound and an esterified product of the aromatic compound including phthalic acid, isophthalic acid, terephthalic acid, naphthalene dicarboxylic acid, 4,4'-biphenyl dicarboxylic acid, trimellitic acid, pyromellitic acid and the like; acid anhydride of the aromatic polyvalent carboxylic acid, esterified products of lower alkyl having about 1 to about 4 carbon atoms of the aromatic polyvalent carboxylic acid, and the like, and any combinations thereof. As the above aromatic polybasic acid and their anhydride and esterified product, phthalic acid, phthalic anhydride, isophthalic acid, trimellitic acid, and trimellitic anhydride are preferable.

Further, as the acid component, acid components other than the aliphatic polybasic acid, the alicyclic polybasic acid and the aromatic polybasic acid, for example, fatty acids such as coconut oil fatty acid, cottonseed oil fatty acid, hemp oil fatty acid, rice bran oil fatty acid, fish oil fatty acid, Tall oil fatty acid, soybean oil fatty acid, linseed oil fatty acid, tung oil fatty acid, rapeseed oil fatty acid, castor oil fatty acid, dehydrated castor oil fatty acid, safflower oil fatty acid etc.; monocarboxylic acids such as lauric acid, myristic acid, palmitic acid, stearic acid, oleic acid acid, linoleic acid, linolenic acid, benzoic acid, p-tert-butylbenzoic acid, cyclohexanoic acid, 10-phenyloctadecanoic acid and the like;
hydroxy carboxylic acids such as lactic acid, 3-hydroxybutanoic acid, 3-hydroxy-4-ethoxybenzoic acid, and the like, and any combination thereof may be mentioned.

As the alcohol component, a polyhydric alcohol having two or more hydroxyl groups in one molecule may be used. The polyhydric alcohol may include, for example, dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butane diol, 2-methyl-1,3-propanediol, 3-methyl-1,2-butanediol, 1,1,1-trimethylolpropane, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexanedimethanol, tricyclodecanedimethanol, hydroxypivalic acid neopentyl glycol ester, hydrogenated bisphenol A, hydrogenated bisphenol F, and dimethylolpropionic acid;
polylactone diol obtained by adding a lactone compound such as ε-caprolactone to the dihydric alcohol;
ester diol compounds such as bis (hydroxyethyl) terephthalate;
polyether diol compounds such as alkylene oxide adducts of bisphenol A, polyethylene glycol, polypropylene glycol and polybutylene glycol;
trihydric or higher alcohol such as glycerin, trimethylolethane, trimethylolpropane, diglycerin, triglycerin, 1,2,6-hexanetriol, pentaerythritol, dipentaerythritol, tris (2-hydroxyethyl) isocyanuric acid, sorbitol, and mannitol;
a polylactone polyol compound obtained by adding a lactone compound such as ε-caprolactone to the trihydric or higher alcohol;
fatty acid esterified products of glycerin, and the like.

As the above-mentioned alcohol component, an alcohol component other than the polyhydric alcohol, for example, a monoalcohol such as methanol, ethanol, propyl alcohol, butyl alcohol, stearyl alcohol or 2-phenoxyethanol; and an alcohol compound obtained by reacting a monoepoxy compound such as propylene oxide, butylene oxide, "Cardura E10" (trade name, glycidyl esters of synthetic hyperbranched saturated fatty acids, manufactured by HEXION Specialty Chemicals, Inc.) with an acid may be used.

The polyester polyol (B-2) is not particularly limited, and it can be produced by a usual method. For example, the acid component and the alcohol component are heated in a nitrogen stream at about 150 to about 250°C. for about 5 to about 10 hours to carry out esterification reaction or transesterification reaction of the acid component and the alcohol component, thereby the polyester polyol (B-2) can be produced.

### The low molecular weight polyol (B-3)

The above compound (B) is not limited to the above-mentioned resin, and a low molecular weight polyol (specifically, molecular weight of 2,000 or less) can also be used.
As the low molecular weight polyol, for example, dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butane diol, 2-methyl-1,3-propanediol, 3-methyl-1,2-butanediol, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexanedimethanol, tricyclodecanedimethanol, hydroxypivalic acid neopentyl glycol ester, hydrogenated bisphenol A, hydrogenated bisphenol F, and dimethylolpropionic acid;
polylactone diol obtained by adding a lactone compound such as ε-caprolactone to the dihydric alcohol;
ester diol compounds such as bis(hydroxyethyl) terephthalate;
polyether diol compounds such as alkylene oxide adducts of bisphenol A, polyethylene glycol, polypropylene glycol and polybutylene glycol;
trihydric or higher alcohol such as glycerin, trimethylolethane, trimethylolpropane, diglycerin, triglycerin, 1,2,6-hexanetriol, pentaerythritol, dipentaerythritol, tris(2-hydroxyethyl) isocyanuric acid, sorbitol, and mannitol.

The thermosetting resin composition using such a low molecular weight polyol is known as a general purpose product and can be obtained at low cost. Further, the low molecular weight polyol has high water solubility and can be suitably used as a crosslinking agent in the case of curing in water-borne system. In recent years, environmental problems are attracting attention, and it can be suitably used as a very important crosslinking agent in promoting the reduction of VOC.

As the compound (B) of the present invention, two or more of the polyacrylic polyol (B-1), the polyester polyol (B-2) and the low molecular weight polyol (B-3) may be used in combination.

In the thermosetting coating of the present invention, the ester group in the ester compound (A) is preferably 1 to 200% (number ratio) relative to the number of hydroxyl groups derived from the compound (B) when the ester group is a tertiary ester, although it can be blended arbitrarily.

In the case where the thermosetting resin composition of the present invention contains a compound (B) having two or more hydroxyl groups, there is an advantage that a polyol that has been used in a conventional thermosetting resin composition using a polyisocyanate curing agent or a melamine resin can be used.

In this way, when used in combination with the compound (B) having a plurality of hydroxyl groups in the molecule, the ester compound (A) preferably contains a tertiary alkyl (meth)acrylate in a proportion of 1 to 100 mol% on the basis of the structural unit of the polymer. That is, it is preferable to use the polymer containing the tertiary alkyl (meth)acrylate in a high proportion as described above, since a sufficient crosslinking density can be obtained.

### (Transesterification catalyst)

The thermosetting resin composition of the present invention contains a transesterification catalyst (C). That is, the transesterification catalyst (C) is added to generate a transesterification reaction between the ester group and the hydroxyl group efficiently and obtain sufficient thermosetting property.

As the transesterification catalyst (C), any known compound capable of activating the transesterification reaction can be used.

Specifically, it may include, for example, various acidic compounds such as hydrochloric acid, sulfuric acid, nitric acid, acetic acid, phosphoric acid or sulfonic acid and the like; various basic compounds such as LiOH, KOH or NaOH, amines and the like; and various metal compounds such as PbO, zinc acetate, lead acetate, antimony trioxide, tetraisopropyl titanate, dibutyl tin dilaurate, dibutyl tin dioctate or monobutyl stannate, and the like. It is also possible to use a photoresponsive catalyst or a thermal latent catalyst which generates acid by light or heat.

Among them, as a material which can sufficiently exhibit the effect of the present invention, it is preferable to use a compound having a sulfonic acid group (dodecylbenzenesulfonic acid, phenolsulfonic acid, metasulfonic acid, paratoluenesulfonic acid) or a compound having a group consisting of an alkali metal salt, or an amine salt of sulfonic acid.

Furthermore, it is most preferable to use a compound having a sulfonic acid group as an SO₃H group, not "an alkali metal salt or an amine salt of sulfonic acid" being a thermal latent catalyst. The transesterification reaction, which is the curing reaction of the present invention, does not necessarily have high reactivity. Therefore, it is better to use a compound having higher acidity to obtain good curing performance.

Bisphenol A or a derivative thereof can also be used as a catalyst for transesterification. However, in the present invention, it is more preferable not to use such a compound. Such a compound is not preferable from the viewpoint that the possibility of giving an unfavorable influence to the environment is suggested.

The photoresponsive catalyst is one which generates an acid upon irradiation with light. In the present invention, the thermosetting resin composition is used, so it is required to be cured by thermal reaction. To use the photoresponsive catalyst is undesirable because heating has to be performed after light irradiation so that efficiency gets worse and in the first place, it cannot be used when the light is obstructed by blends such as base materials and fillers.

The amount of the transesterification catalyst (C) used is preferably 0.01 to 50% by weight based on the total weight of the ester compound (A) and the compound (B). Within such a range, it is preferable in that good curing reaction can be carried out at low temperature.

The form of the thermosetting resin composition of the present invention is not particularly limited, but it is particularly preferably an organic solvent-type form or a water-borne form. This is preferable in that thin film coating can be performed and low-temperature curing can be performed. The water-borne system may be water-soluble or water-dispersible, and it may contain an aqueous solvent that can be mixed with water at an arbitrary ratio such as ethanol, methanol, alcohol type, glycol type, ether type, ketone type or the like in addition to water.

The organic solvent-type thermosetting resin composition is a composition in which the above components are dissolved or dispersed in various organic solvents. The organic solvent that can be used is not particularly limited, and examples thereof include hydrocarbons such as 1-hexane, 1-octane, 1-decane, 1-tetradecane, cyclohexane, benzene and xylene, ethers such as dimethyl ether and diethyl ether, ketones such as acetone, and methyl ethyl ketone, chlorinated hydrocarbons such as trichloromethane, carbon tetrachloride, dichloroethane, trichloroethane, tetrachloroethylene and the like, and any known ones such as ethanol, methanol, propanol, butanol, acetone, cyclohexanone and the like.

Further, as a two-component resin composition, a solution containing the ester compound (A) and a base solution containing the compound (B) may be combined and used by mixing them immediately before use. By doing so, storage stability is favorable. It is also possible to use a two-component type in which a catalyst solution containing the transesterification catalyst (C) is mixed with a solution containing the ester compound (A) and the compound (B) having two or more hydroxyl groups in the molecule.

Further, in the case of preparing a powdery thermosetting resin composition such as a powder coating, it can be prepared by drying, mixing, and crushing the ester compound (A), the compound (B) and the transesterification catalyst (C) according to a usual way.

The thermosetting composition of the present invention may further be used in combination with other crosslinking agents commonly used in the fields of coatings and adhesives in addition to the above components (A) to (C). The crosslinking agent that can be used is not particularly limited, and examples thereof include an isocyanate compound, a blocked isocyanate compound, a melamine resin, an epoxy resin, a silane compound, and the like. In addition, vinyl ether, an anionic polymerizable monomer, a cationic polymerizable monomer, and a radical polymerizable monomer, etc. may be used in combination. A curing agent for accelerating the reaction of the used crosslinking agent may be used in combination.

The above-mentioned other crosslinking agent is not indispensable, and even if the thermosetting resin composition of the present invention does not contain it, it is preferable from the viewpoint that good curability can be obtained.

The thermosetting resin composition of the present invention may contain a nonaqueous dispersion resin (NAD) when necessary according to the purpose. However, the nonaqueous dispersion resin (NAD) is not indispensable and may not contain it.

The thermosetting resin composition of the present invention can be suitably used in the fields of thermosetting coatings, thermosetting adhesives and the like.

When it is used as a thermosetting coating material, in addition to each of the above-described components, additives commonly used in the coating material field may be used in combination. For example, coloring pigments, extender pigments, bright pigments and the like, and any combination thereof may be used in combination.

When a pigment is used, it is preferably contained in a total amount of 1 to 500% by weight, based on 100% by weight of the total solid content of the resin component. The lower limit is more preferably 3% by weight, and still more preferably 5 parts by weight. The upper limit is more preferably 400% by weight, and still more preferably 300% by weight.

Examples of the coloring pigment include titanium oxide, zinc white, carbon black, molybdenum red, prussian blue, cobalt blue, azo pigment, phthalocyanine pigment, quinacridone pigment, isoindoline pigment, threne pigment, perylene pigment, dioxazine type pigment, diketopyrrolopyrrole type pigment, and the like, and any combination thereof.

Examples of the extender pigment include clay, kaolin, barium sulfate, barium carbonate, calcium carbonate, talc, silica, alumina white and the like, and barium sulfate and/or talc is preferable, and barium sulfate is more preferable.

Examples of the bright pigment include, for example, aluminum oxide coated with aluminum (including vapor-deposited aluminum), copper, zinc, brass, nickel, aluminum oxide, mica, titanium oxide or iron oxide, mica coated with titanium oxide or iron oxide, glass flakes, hologram pigments, etc., and any combinations thereof. The aluminum pigment includes nonleafing type aluminum and leafing type aluminum.

If desired, the thermosetting coating may further contain an additive for coating such as a thickener, an ultraviolet absorber, a light stabilizer, an antifoaming agent, a plasticizer, an organic solvent other than the hydrophobic solvent, a surface conditioner, an antisettling agent, and the like.

Examples of the thickener include inorganic thickeners such as silicate, metal silicate, montmorillonite, colloidal alumina and the like; polyacrylic acid thickeners such as copolymers of (meth)acrylic acid and (meth)acrylic acid ester, and sodium polyacrylate;
associative type thickener having a hydrophilic part and a hydrophobic part in one molecule and showing a thickening effect by an adsorption of the hydrophobic portion on the surface of the pigment or emulsion particle in the coating, or an association of the hydrophobic parts, in an aqueous medium;
cellulose derivative thickeners such as carboxymethylcellulose, methylcellulose, hydroxyethylcellulose and the like;
protein type thickeners such as casein, sodium caseinate, ammonium caseinate and the like
alginic acid thickeners such as sodium alginate; polyvinyl thickeners such as polyvinyl alcohol, polyvinyl pyrrolidone, polyvinyl benzyl ether copolymers; polyether thickeners such as pluronic polyethers, polyether dialkyl esters, polyether dialkyl ethers, polyether epoxy modified products and the like;
maleic anhydride copolymer type thickener such as a partial ester of vinyl methyl ether-maleic anhydride copolymer; polyamide type thickeners such as a polyamide amine salt, etc., and any combination thereof.

The polyacrylic acid thickener is commercially available, and examples thereof include "ACRYSOLASE-60", "ACRYSOLTT-615", and "ACRYSOLRM-5" (trade names) manufactured by Rohm and Haas Company, and "SN Thickener 613", "SN Thickener 618", "SN Thickener 630", "SN Thickener 634", and "SN Thickener 636" (trade names) manufactured by San Nopco CO., LTD..

The associative type thickener is commercially available, and examples thereof include "UH-420", "UH-450", "UH-462", "UH-472", "UH-540", "UH-752", "UH-756VF", and "UH-814N" (trade names) manufactured by ADEKA Corporation, "ACRYSOLRM-8W", "ACRYSOLRM-825", "ACRYSOLRM-2020NPR", "ACRYSOLRM-12W", and "ACRYSOLSCT-275" (trade names) manufactured by Rohm and Haas Company, "SN Thickner 612", "SN Thickener 621 N", "SN Thickener 625 N", "SN Thickener 627 N", and "SN Thickener 660 T" (trade names) manufactured by SAN NOPCO CO., LTD. and the like.

The object to which the thermosetting coating can be applied is not particularly limited, and examples thereof include an outer plate portion of an automobile body such as a passenger car, a truck, a motorcycle, and a bus; an automobile part; house electrical products such as a mobile phone, an audio device, etc., building materials, furniture, adhesives, film and glass coating agents, and the like. When used as an automotive coating, it can be used for the effect of an arbitrary layer such as an intermediate coating, a base coating and a clear coating.

The object to be coated may be one obtained by applying a surface treatment such as a phosphate treatment, a chromate treatment, a composite oxide treatment or the like to the metal surface of the metal material and a car body molded therefrom, or may be a substrate to be coated having a coating film.
As the above substrate to be coated having the coating film, there can be mentioned a substrate which is subjected to a surface treatment as desired and has an undercoating film formed thereon. In particular, a car body having an undercoating film formed by an electrodeposition coating is preferable, and a car body having an undercoating film formed by a cationic electrodeposition coating is more preferable.

The substrate to be coated may be one obtained by subjecting the surface of plastic such as plastic material and automobile part molded therefrom to surface treatment, primer coating or the like as desired. Further, the plastic material and the metal material may be combined.

The method of applying the thermosetting coating is not particularly limited, and examples thereof include an air spray coating, an airless spray coating, a rotary atomization coating, a curtain coating and the like, and air spray coating, rotary atomization coating, and the like are preferable. At the time of coating, electrostatic application may be performed if desired. By the above coating method, a wet coating film can be formed from the water-borne coating composition.

The wet coating film can be cured by heating. The curing can be carried out by a known heating means, for example, a drying oven such as an air-heating furnace, an electric furnace, an infrared induction heating furnace or the like. The wet coating film is preferably cured by heating at a temperature in the range of about 80 to about 180°C, more preferably about 100 to about 170°C, and even more preferably about 120 to about 160°C, and preferably for about 10 to about 60 minutes, and more preferably for about 15 to about 40 minutes. It is also preferable in that it can cope with low temperature curing at 80 to 140°C. The present invention is also a cured film cured in this way.

When the thermosetting resin composition of the present invention is used in the field of coatings, sufficient curing performance such as smoothness, water resistance, acid resistance, etc. is required. On the other hand, when it is used in the field of adhesives, pressure sensitive adhesives and the like, high curing performance required for coatings is not required. The thermosetting resin composition of the present invention can be brought to a level that can be used as a coating, but compositions which do not reach such a level may be usable in the fields of adhesives, pressure sensitive adhesives and the like.

The present invention is a cured film formed by three-dimensionally crosslinking the thermosetting resin composition described above.
Such a cured film has sufficient performance so that it can be used as a coating/adhesive.

### EXAMPLES

Hereinafter, the present disclosure will be explained with reference to examples. However, the present disclosure is not limited to these examples. In addition, "part(s)" means "part(s) by weight" in the examples.

### Synthesis Example 1

An additional experiment of the resin composition disclosed in the prior document (Japanese Kokai Publication Hei9-59543) was performed. As a comparative resin, 375 parts of t-butyl methacrylate (Kyoeisha Chemical Co., Ltd., Light Ester TB), 125 parts of hydroxyethyl methacrylate (Kyoeisha Chemical Co., Ltd., Light Ester HO-250) were mixed to prepare a monomer mixture solution, and 25 parts of t-butyl peroxyoctoate and 3 parts of 2,2'-azobis(isobutyronitrile) as an initiator were dissolved in xylene to prepare an initiator solution. Xylene 500 parts was placed in a stirrable flask, and the monomer solution and the initiator solution were added dropwise while nitrogen was enclosed. The polymerization temperature at this time was 130°C. The dropwise addition was carried out for 4 hours, and further aging was carried out at 130°C for 10 hours to obtain a comparative polymer solution A.

### Synthesis Example 2

N-butyl methacrylate (Kyoeisha Chemical Co., Ltd., Light Ester NB) 240 parts, 110 parts of hydroxyethyl methacrylate (Kyoeisha Chemical Co., Ltd., Light Ester HO-250) and 30 parts of styrene were mixed to prepare a monomer mixture solution, and 25 parts of 2,2'-azobis(2,4-dimethylvaleronitrile) (Wako Pure Chemical Industries, V-65) as an initiator was dissolved in an aromatic hydrocarbon (T-SOL 100) to prepare an initiator solution. Aromatic hydrocarbon (T-SOL 100) 250 parts and 250 parts of cyclohexanone were placed in a stirrable flask, and the monomer solution and the initiator solution were added dropwise while nitrogen was enclosed. The polymerization temperature at this time was 100°C. The dropwise addition was carried out for 2 hours, and further aging was carried out at 100°C for 4 hours to obtain a polyol A.

### Synthesis Example 3

N-butyl methacrylate (Kyoeisha Chemical Co., Ltd., Light Ester NB) 240 parts, 62 parts of hydroxyethyl methacrylate (Kyoeisha Chemical Co., Ltd., Light Ester HO-250), 25 parts of styrene, and 10 parts of reactive emulsifier (DKS Co. Ltd. Aquaron KH-10) were mixed. Then, 150 parts of ion exchanged water was mixed with the obtained solution and emulsification was carried out for 1 hour at room temperature using a homomixer to prepare a monomer emulsion. Ammonium peroxodisulfate 9 parts and 7 parts of sodium bisulfite as an initiator were dissolved in ion exchanged water to prepare an initiator solution. Ion exchanged water 260 parts was placed in a stirrable flask, and the monomer solution and the initiator solution were added dropwise while nitrogen was enclosed to carry out polymerization. The polymerization temperature at this time was 80°C. The dropwise addition was carried out for 2 hours, and further aging was carried out at 80°C for 4 hours to obtain a polyol B.

### Synthesis Example 4

2,2'-azobis(2,4-dimethylvaleronitrile) (Wako Pure Chemical Industries, V-65) 25 parts as an initiator was dissolved in an aromatic hydrocarbon (T-SOL 100) to prepare an initiator solution.
Aromatic hydrocarbon (T-SOL 100) 250 parts was placed in a stirrable flask, and 240 parts of t-butyl methacrylate (Kyoeisha Chemical Co., Ltd., Light Ester TB) and the initiator solution were added dropwise while nitrogen was enclosed to carry out polymerization. The polymerization temperature at this time was 100°C. The dropwise addition was carried out for 2 hours, and further aging was carried out at 100°C for 4 hours to obtain an ester compound solution A.

### Synthesis Example 5

2,2'-azobis(2,4-dimethylvaleronitrile) (Wako Pure Chemical Industries, V-65) 25 parts as an initiator was dissolved in an aromatic hydrocarbon (T-SOL 100) to prepare an initiator solution.
Aromatic hydrocarbon (T-SOL 100) 250 parts was placed in a stirrable flask, and 240 parts of t-butyl acrylate (Kyoeisha Chemical Co., Ltd., Light Acrylate TB) and the initiator solution were added dropwise while nitrogen was enclosed to carry out polymerization. The polymerization temperature at this time was 100°C. The dropwise addition was carried out for 2 hours, and further aging was carried out at 100°C for 4 hours to obtain an ester compound solution B.

### Synthesis Example 6

N-butyl methacrylate (Kyoeisha Chemical Co., Ltd., Light Ester NB) 240 parts, 120 parts of t-butyl methacrylate (Kyoeisha Chemical Co., Ltd., Light Ester TB) and 30 parts of styrene were mixed to prepare a monomer mixture solution, and 25 parts of 2,2'-azobis(2,4-dimethylvaleronitrile) (Wako Pure Chemical Industries, V-65) as an initiator was dissolved in an aromatic hydrocarbon (T-SOL 100) to prepare an initiator solution. Aromatic hydrocarbon (T-SOL 100) 250 parts and 250 parts of cyclohexanone were placed in a stirrable flask, and the monomer solution and the initiator solution were added dropwise while nitrogen was enclosed. The polymerization temperature at this time was 100°C. The dropwise addition was carried out for 2 hours, and further aging was carried out at 100°C for 4 hours to obtain an ester compound solution C.

### Synthesis Example 7

N-butyl methacrylate (Kyoeisha Chemical Co., Ltd., Light Ester NB) 245 parts, 110 parts of t-butyl acrylate (Kyoeisha Chemical Co., Ltd., Light Acrylate TB) and 30 parts of styrene were mixed to prepare a monomer mixture solution, and 25 parts of 2,2'-azobis(2,4-dimethylvaleronitrile) (Wako Pure Chemical Industries, V-65) as an initiator was dissolved in an aromatic hydrocarbon (T-SOL 100) to prepare an initiator solution. Aromatic hydrocarbon 250 parts was placed in a stirrable flask, and the monomer solution and the initiator solution were added dropwise while nitrogen was enclosed. The polymerization temperature at this time was 100°C. The dropwise addition was carried out for 2 hours, and further aging was carried out at 100°C for 4 hours to obtain an ester compound solution D.

### Synthesis Example 8

Ethylene glycol monoacetoacetate monomethacrylate 54 parts, 32 parts of n-butyl acrylate, 38 parts of potassium carbonate, 2 parts of 18-crown-6 ether and 112 parts of tetrahydrofuran were mixed and stirred at 50°C for 3 hours. After completion of the reaction, cyclohexane and water were added and washed with water. The organic layer was neutralized with a saturated aqueous solution of ammonium chloride and washed twice with water, and the obtained organic layer was concentrated under reduced pressure to obtain a monomer A.

### Synthesis Example 9

Ethylene glycol monoacetoacetate monomethacrylate 54 parts, 32 parts of tertiary butyl acrylate, 38 parts of potassium carbonate, 2 parts of 18-crown-6 ether and 112 parts of tetrahydrofuran were mixed and stirred at 50°C for 3 hours. After completion of the reaction, cyclohexane and water were added and washed with water. The organic layer was neutralized with a saturated aqueous solution of ammonium chloride and washed twice with water, and the obtained organic layer was concentrated under reduced pressure to obtain a monomer B.

### Synthesis Example 10

Ethylene glycol monoacetoacetate monomethacrylate 54 parts, 58 parts of tertiary butyl acrylate, 38 parts of potassium carbonate, 2 parts of 18-crown-6 ether and 112 parts of tetrahydrofuran were mixed and stirred at 50°C for 3 hours. After completion of the reaction, cyclohexane and water were added and washed with water. The organic layer was neutralized with a saturated aqueous solution of ammonium chloride and washed twice with water, and the obtained organic layer was concentrated under reduced pressure to obtain a monomer C.

### Synthesis Example 11

Sulfuric acid 6.4 parts, 31 parts of magnesium sulfate, and 130 parts of methylene chloride were mixed and stirred at room temperature for 15 minutes. After stirring, 15 parts of 2-methacryloyloxyethyl succinic acid (Kyoeisha Chemical Co., Ltd., Light Ester HO-MS) and 24 parts of tertiary butyl alcohol were added and stirred at room temperature for 20 hours. After completion of the reaction, water was added and washed with water. The organic layer was neutralized with a saturated aqueous solution of sodium hydrogen carbonate and washed twice with water, and the obtained organic layer was concentrated under reduced pressure to obtain a monomer D.

### Synthesis Example 12

2,2'-azobis(2,4-dimethylvaleronitrile) (Wako Pure Chemical Industries, V-65) 7.5 parts as an initiator was mixed with aromatic hydrocarbon (T-SOL 100) to prepare an initiator solution.
Aromatic hydrocarbon (T-SOL 100) 150 parts was placed in a stirrable flask, and 150 parts of monomer A and the initiator solution were added dropwise while nitrogen was enclosed. The polymerization temperature at this time was 100°C. The dropwise addition was carried out for 2 hours, and further aging was carried out at 100°C for 4 hours to obtain an ester compound solution E.

### Synthesis Example 13

2,2'-azobis(2,4-dimethylvaleronitrile) (Wako Pure Chemical Industries, V-65) 7.5 parts as an initiator was mixed with aromatic hydrocarbon (T-SOL 100) to prepare an initiator solution. Aromatic hydrocarbon (T-SOL 100) 150 parts was placed in a stirrable flask, and 150 parts of monomer B and the initiator solution were added dropwise while nitrogen was enclosed. The polymerization temperature at this time was 100°C. The dropwise addition was carried out for 2 hours, and further aging was carried out at 100°C for 4 hours to obtain an ester compound solution F.

### Synthesis Example 14

2,2'-azobis(2,4-dimethylvaleronitrile) (Wako Pure Chemical Industries, V-65) 7.5 parts as an initiator was mixed with an aromatic hydrocarbon (T-SOL 100) to prepare an initiator solution.
Aromatic hydrocarbon (T-SOL 100) 150 parts was placed in a stirrable flask, and 150 parts of monomer C and the initiator solution were added dropwise while nitrogen was enclosed. The polymerization temperature at this time was 100°C. The dropwise addition was carried out for 2 hours, and further aging was carried out at 100°C for 4 hours to obtain an ester compound solution G.

### Synthesis Example 15

2,2'-azobis(2,4-dimethylvaleronitrile) (Wako Pure Chemical Industries, V-65) 7.5 parts as an initiator was mixed with an aromatic hydrocarbon (T-SOL 100) to prepare an initiator solution.
Aromatic hydrocarbon (T-SOL 100) 150 parts was placed in a stirrable flask, and 150 parts of monomer D and the initiator solution were added dropwise while nitrogen was enclosed. The polymerization temperature at this time was 100°C. The dropwise addition was carried out for 2 hours, and further aging was carried out at 100°C for 4 hours to obtain an ester compound solution H.

### Synthesis Example 16

N-butyl methacrylate (Kyoeisha Chemical Co., Ltd., Light Ester NB) 75 parts, 65 parts of monomer A and 10 parts of styrene were mixed to prepare a monomer solution. 2,2'-azobis (2,4-dimethylvaleronitrile) (Wako Pure Chemical Industries, V-65) 7.5 parts was dissolved in an aromatic hydrocarbon (T-SOL 100) to prepare an initiator solution. Aromatic hydrocarbon (T-SOL 100) 150 parts was placed in a stirrable flask, and the monomer solution and the initiator solution were added dropwise while nitrogen was enclosed. The polymerization temperature at this time was 100°C. The dropwise addition was carried out for 2 hours, and further aging was carried out at 100°C for 4 hours to obtain an ester compound I.

### Synthesis Example 17

N-butyl methacrylate (Kyoeisha Chemical Co., Ltd., Light Ester NB) 75 parts, 65 parts of monomer B and 10 parts of styrene were mixed to prepare a monomer solution. 2,2'-azobis(2,4-dimethylvaleronitrile) (Wako Pure Chemical Industries, V-65) 7.5 parts was dissolved in an aromatic hydrocarbon (T-SOL 100) to prepare an initiator solution. Aromatic hydrocarbon (T-SOL 100) 150 parts was placed in a stirrable flask, and the monomer solution and the initiator solution were added dropwise while nitrogen was enclosed. The polymerization temperature at this time was 100°C. The dropwise addition was carried out for 2 hours, and further aging was carried out at 100°C for 4 hours to obtain an ester compound J.

### Synthesis Example 18

N-butyl methacrylate (Kyoeisha Chemical Co., Ltd., Light Ester NB) 75 parts, 65 parts of monomer C and 10 parts of styrene were mixed to prepare a monomer solution. 2,2'-azobis(2,4-dimethylvaleronitrile) (Wako Pure Chemical Industries, V-65) 7.5 parts was dissolved in an aromatic hydrocarbon (T-SOL 100) to prepare an initiator solution. Aromatic hydrocarbon (T-SOL 100) 150 parts was placed in a stirrable flask, and the monomer solution and the initiator solution were added dropwise while nitrogen was enclosed. The polymerization temperature at this time was 100°C. The dropwise addition was carried out for 2 hours, and further aging was carried out at 100°C for 4 hours to obtain an ester compound K.

### Synthesis Example 19

N-butyl methacrylate (Kyoeisha Chemical Co., Ltd., Light Ester NB) 75 parts, 65 parts of monomer D and 10 parts of styrene were mixed to prepare a monomer solution. 2,2'-azobis(2,4-dimethylvaleronitrile) (Wako Pure Chemical Industries, V-65) 7.5 parts was dissolved in an aromatic hydrocarbon (T-SOL 100) to prepare an initiator solution. Aromatic hydrocarbon (T-SOL 100) 150 parts was placed in a stirrable flask, and the monomer solution and the initiator solution were added dropwise while nitrogen was enclosed. The polymerization temperature at this time was 100°C. The dropwise addition was carried out for 2 hours, and further aging was carried out at 100°C for 4 hours to obtain an ester compound L.

### Synthesis Example 20

N-butyl methacrylate (Kyoeisha Chemical Co., Ltd., Light Ester NB) 240 parts, 110 parts of t-butyl acrylate (Kyoeisha Chemical Co., Ltd., Light Acrylate TB), 30 parts of styrene, and 11 parts of reactive emulsifier (DKS Co. Ltd.: Aquaron KH-10) were mixed. Then, 173 parts of ion exchanged water was mixed with the obtained solution and emulsification was carried out for 1 hour at room temperature using a homomixer to prepare a monomer emulsion. Ammonium peroxodisulfate 11 parts and 8 parts of sodium bisulfite as an initiator were dissolved in water to prepare an initiator solution.

Ion exchanged water 290 parts was placed in a stirrable flask, and the monomer solution and the initiator solution were added dropwise while nitrogen was enclosed. The polymerization temperature at this time was 80°C. The dropwise addition was carried out for 2 hours, and further aging was carried out at 80°C for 4 hours to obtain an ester compound solution M.

The properties of these compounds are shown in Table 1. In table 1, Mn (number average molecular weight) and Mw (weight average molecular weight) are values of molecular weight as measured by gel permeation chromatography (GPC) in terms of polystyrene. GPC KF-804L (manufactured by Showa Denko KK) was used as the column, and tetrahydrofuran as the solvent.

**Table 1**

| | Solid content/% | Mn | Mw | Mw/Mn |
|---|---|---|---|---|
| Comparative polymer A | 50 | 5,000 | 7,800 | 1.56 |
| Polyol A | 50 | 5,300 | 9,400 | 1.78 |
| Polyol B | 45 | - | - | - |
| Ester compound A | 43 | 4,400 | 7,300 | 1.67 |
| Ester compound B | 50 | 2,700 | 5,200 | 1.95 |
| Ester compound C | 50 | 5,000 | 9,000 | 1.8 |
| Ester compound D | 50 | 2,700 | 5,200 | 1.93 |
| Ester compound E | 50 | 5,800 | 11,600 | 2.01 |
| Ester compound F | 50 | 7,100 | 13,600 | 1.93 |
| Ester compound G | 50 | 2,000 | 8,500 | 4.18 |
| Ester compound H | 50 | 5,400 | 12,600 | 2.34 |
| Ester compound I | 50 | 3,600 | 9,600 | 2.65 |
| Ester compound J | 50 | 3,000 | 9,400 | 3.10 |
| Ester compound K | 50 | 4,400 | 10,800 | 2.45 |
| Ester compound L | 50 | 4,900 | 11,400 | 2.32 |
| Ester compound M | 45 | - | - | - |

The Polyols obtained by the above synthesis examples and the crosslinking agent were mixed in the proportions shown in the following tables 2 and 3 to prepare a thermosetting resin composition.

### Comparative Example 1

Zinc acetate was mixed with the comparative polymer solution A so as to be 0.2 wt% relative to the solid content of the comparative polymer solution A. A coating film of 400 µm was formed by WET using an applicator and cured at 170°C for 20 minutes. Thereafter, the gel fraction, the xylene rubbing test and the water resistance were evaluated and the curability of the prepared liquid was confirmed by a rigid body pendulum test.

### Example 1

Phenolsulfonic acid (PHS) was mixed with a mixture of polyol A 100 parts and ester compound A 30 parts so as to be 2 wt% relative to the solid content of the mixture. A coating film of 400 µm was formed by WET using an applicator, and cured at 140°C for 30 minutes. Thereafter, the gel fraction, the xylene rubbing test and the water resistance were evaluated.

### Example 2

Phenolsulfonic acid (PHS) was mixed with a mixture of polyol A 100 parts and ester compound B 30 parts so as to be 2 wt% relative to the solid content of the mixture. A coating film of 400 µm was formed by WET using an applicator, and cured at 140°C for 30 minutes. Thereafter, the gel fraction, the xylene rubbing test and the water resistance were evaluated.

### Example 3

Methanesulfonic acid (MSA) was mixed with a mixture of polyol A 100 parts and ester compound C 30 parts so as to be 3 wt% relative to the solid content of the mixture. A coating film of 400 µm was formed by WET using an applicator, and cured at 140°C for 30 minutes. Thereafter, the gel fraction, the xylene rubbing test and the water resistance were evaluated.

### Example 4

Methanesulfonic acid (MSA) was mixed with a mixture of polyol A 100 parts and ester compound D 30 parts so as to be 3 wt% relative to the solid content of the mixture. A coating film of 400 µm was formed by WET using an applicator, and cured at 140°C for 30 minutes. Thereafter, the gel fraction, the xylene rubbing test and the water resistance were evaluated.

**Table 2**

| | Compar. Ex. 1 | Ex. 1 | Ex. 2 | Ex. 3 | Ex. 4 |
|---|---|---|---|---|---|
| Comparative polymer A | 100 | | | | |
| Polyol A | | 100 | 100 | 100 | 100 |
| Ester compound A | | 30 | | | |
| Ester compound B | | | 30 | | |
| Ester compound C | | | | 100 | |
| Ester compound D | | | | | 100 |
| Zinc acetate | 0.1 | | | | |
| PHS | | 1.2 | 1.2 | | |
| MSA | | | | 3 | 3 |
| Curing temperature/°C | 170 | 140 | 140 | 140 | 140 |
| Curing time/ minutes | 20 | 30 | 30 | 30 | 30 |
| Gel fraction/% | × | ○ | ⊚ | ○ | ⊚ |
| Xylene rubbing | × | ○ | ○ | ○ | ○ |
| Water resistance | × | ○ | ○ | ○ | ○ |
| Rigid body pendulum | Fig. 1 | | | | |

| | | | | | |
|---|---|---|---|---|---|
| PHS: Phenolsulfonic acid MSA: Methanesulfonic acid | | | | | |

In the tables in the examples of the specification, when each component is a solution, the compounding amounts in the table are all weights on a solution basis.

Comparative examples 1 is an additional test for confirming the prior document (Japanese Kokai Publication Hei9-59543), but the gel fraction did not result in reported results. Moreover, the results of evaluation of the xylene rubbing and the water resistance were bad. In examples 1 to 4, the film performances such as the gel fraction, the xylene rubbing, and the water resistance are improved so it is clear that the curing reaction is good.

### Example 5

Phenolsulfonic acid (PHS) was mixed with a mixture of polyol A 100 parts and ester compound E 30 parts so as to be 2 wt% relative to the solid content of the mixture. A coating film of 400 µm was formed by WET using an applicator, and cured at 140°C for 30 minutes. Thereafter, the gel fraction, the xylene rubbing test and the water resistance were evaluated and the curability of the prepared liquid was confirmed by a rigid body pendulum test.

### Example 6

Phenolsulfonic acid (PHS) was mixed with a mixture of polyol A 100 parts and ester compound F 30 parts so as to be 2 wt% relative to the solid content of the mixture. A coating film of 400 µm was formed by WET using an applicator, and cured at 140°C for 30 minutes. Thereafter, the gel fraction, the xylene rubbing test and the water resistance were evaluated and the curability of the prepared liquid was confirmed by a rigid body pendulum test.

### Example 7

Phenolsulfonic acid (PHS) was mixed with a mixture of polyol A 100 parts and ester compound G 30 parts so as to be 2 wt% relative to the solid content of the mixture. A coating film of 400 µm was formed by WET using an applicator, and cured at 140°C for 30 minutes. Thereafter, the gel fraction, the xylene rubbing test and the water resistance were evaluated and the curability of the prepared liquid was confirmed by a rigid body pendulum test.

### Example 8

Phenolsulfonic acid (PHS) was mixed with a mixture of polyol A 100 parts and ester compound H 30 parts so as to be 2 wt% relative to the solid content of the mixture. A coating film of 400 µm was formed by WET using an applicator, and cured at 140°C for 30 minutes. Thereafter, the gel fraction, the xylene rubbing test and the water resistance were evaluated.

### Example 9

Phenolsulfonic acid (PHS) was mixed with a mixture of polyol A 100 parts and ester compound I 100 parts so as to be 2 wt% relative to the solid content of the mixture. A coating film of 400 µm was formed by WET using an applicator, and cured at 140°C for 30 minutes. Thereafter, the gel fraction, the xylene rubbing test and the water resistance were evaluated.

### Example 10

Phenolsulfonic acid (PHS) was mixed with a mixture of polyol A 100 parts and ester compound J 100 parts so as to be 2 wt% relative to the solid content of the mixture. A coating film of 400 µm was formed by WET using an applicator, and cured at 140°C for 30 minutes. Thereafter, the gel fraction, the xylene rubbing test and the water resistance were evaluated.

### Example 11

Phenolsulfonic acid (PHS) was mixed with a mixture of polyol A 100 parts and ester compound K 55 parts so as to be 2 wt% relative to the solid content of the mixture. A coating film of 400 µm was formed by WET using an applicator, and cured at 140°C for 30 minutes. Thereafter, the gel fraction, the xylene rubbing test and the water resistance were evaluated.

### Example 12

Phenolsulfonic acid (PHS) was mixed with a mixture of polyol A 100 parts and ester compound L 100 parts so as to be 2 wt% relative to the solid content of the mixture. A coating film of 400 µm was formed by WET using an applicator, and cured at 140°C for 30 minutes. Thereafter, the gel fraction, the xylene rubbing test and the water resistance were evaluated.

### Example 13

Phenolsulfonic acid (PHS) was mixed with a mixture of polyol B 130 parts and ester compound M 100 parts so as to be 2 wt% relative to the solid content of the mixture. A coating film of 400 µm was formed by WET using an applicator, and cured at 140°C for 30 minutes. Thereafter, the gel fraction, the xylene rubbing test and the water resistance were evaluated.

**Table 3**

| | Ex. 5 | Ex. 6 | Ex. 7 | Ex. 8 |
|---|---|---|---|---|
| Polyol A | 100 | 100 | 100 | 100 |
| Ester compound E | 30 | | | |
| Ester compound F | | 30 | | |
| Ester compound G | | | 30 | |
| Ester compound H | | | | 30 |
| PHS | 1.2 | 1.2 | 1.2 | 1.2 |
| Curing temperature/°C | 140 | 140 | 140 | 140 |
| Curing time/minutes | 30 | 30 | 30 | 30 |
| Gel fraction/% | ⊚ | ⊚ | ⊚ | ⊚ |
| Xylene rubbing | × | ⊚ | ⊚ | ⊚ |
| Water resistance | × | ○ | ○ | ○ |
| Rigid body pendulum | Fig. 2 | Fig. 3 | Fig. 4 | |

**Table 4**

| | Ex. 9 | Ex. 10 | Ex. 11 | Ex. 12 | Ex. 13 |
|---|---|---|---|---|---|
| Polyol A | 100 | 100 | 100 | 100 | |
| Polyol B | | | | | 130 |
| Ester compound I | 100 | | | | |
| Ester compound J | | 100 | | | |
| Ester compound K | | | 55 | | |
| Ester compound L | | | | 100 | |
| Ester compound M | | | | | 100 |
| PHS | 1.9 | 1.9 | 1.5 | 1.9 | 1.9 |
| Curing temperature/°C | 140 | 140 | 140 | 140 | 140 |
| Curing time/minutes | 30 | 30 | 30 | 30 | 30 |
| Gel fraction/% | ○ | ⊚ | ⊚ | ⊚ | ⊚ |
| Xylene rubbing | × | ○ | ○ | ○ | ○ |
| Water resistance | × | ○ | ○ | ○ | ○ |

From the results of gel fractions and rigid body pendulum tests of Examples 1 to 13, it is obvious that they are thermally cured. Further, the tertiary ester group more effectively proceeded the crosslinking than the primary ester, and further the reactivity was improved by lengthening the side chain via the linking group.

### Synthesis Example 21

T-butyl acrylate 24 parts, 40 parts of di-t-butyl malonate, 28 parts of potassium carbonate, 1.5 parts of 18-crown-6 ether and 64 parts of tetrahydrofuran were mixed and stirred at 50°C for 1 hour. After completion of the reaction, cyclohexane and water were added and washed with water. The organic layer was neutralized with a saturated aqueous solution of ammonium chloride and washed twice with water, and the obtained organic layer was concentrated under reduced pressure to obtain an ester compound N.

### Synthesis Example 22

1,6-hexanediol diacrylate 31 parts, 60 parts of di-t-butyl malonate, 42 parts of potassium carbonate, 1.1 parts of 18-crown-6 ether and 91 parts of tetrahydrofuran were mixed and stirred at 50°C for 3 hours. After completion of the reaction, cyclohexane and water were added and washed with water. The organic layer was neutralized with a saturated aqueous solution of ammonium chloride and washed twice with water, and the obtained organic layer was concentrated under reduced pressure to obtain an ester compound O.

### Synthesis Example 23

Trimethylolpropane triacrylate 80 parts, 37 parts of di-t-butyl malonate, 56 parts of potassium carbonate, 1.5 parts of 18-crown-6 ether and 117 parts of tetrahydrofuran were mixed and stirred at 50°C for 3 hours. After completion of the reaction, cyclohexane and water were added and washed with water. The organic layer was neutralized with a saturated aqueous solution of ammonium chloride and washed twice with water, and the obtained organic layer was concentrated under reduced pressure to obtain an ester compound P.

### Synthesis Example 24

Pentaerythritol triacrylate hexamethylene diisocyanate urethane prepolymer (Kyoeisha Chemical Co., Ltd., Urethane Acrylate UA-306H) 41 parts, 70 parts of dit-butyl malonate, 49 parts of potassium carbonate, 1.3 parts of 18-crown-6 ether and 111 parts of tetrahydrofuran were mixed and stirred at 50°C for 3 hours. After completion of the reaction, cyclohexane and water were added and washed with water. The organic layer was neutralized with a saturated aqueous solution of ammonium chloride and washed twice with water, and the obtained organic layer was concentrated under reduced pressure and diluted with aromatic hydrocarbon (T-SOL 100) to have a solid content of 50%, thereby obtaining ester compound Q.

### Example 14

Phenolsulfonic acid (PHS) was mixed with a mixture of polyol A 100 parts and ester compound N 15 parts so as to be 2 wt% relative to the solid content of the mixture. A coating film of 400 µm was formed by WET using an applicator, and cured at 140°C for 30 minutes. Thereafter, the gel fraction, the xylene rubbing test and the water resistance were evaluated.

### Example 15

Phenolsulfonic acid (PHS) was mixed with a mixture of polyol A 100 parts and ester compound O 18 parts so as to be 2 wt% relative to the solid content of the mixture. A coating film of 400 µm was formed by WET using an applicator, and cured at 140°C for 30 minutes. Thereafter, the gel fraction, the xylene rubbing test and the water resistance were evaluated.

### Example 16

Phenolsulfonic acid (PHS) was mixed with a mixture of polyol A 100 parts and ester compound P 18 parts so as to be 2 wt% relative to the solid content of the mixture. A coating film of 400 µm was formed by WET using an applicator, and cured at 140°C for 30 minutes. Thereafter, the gel fraction, the xylene rubbing test and the water resistance were evaluated and the curability of the prepared liquid was confirmed by a rigid body pendulum test.

### Example 17

Phenolsulfonic acid (PHS) was mixed with a mixture of polyol A 100 parts and ester compound Q 43 parts so as to be 2 wt% relative to the solid content of the mixture. A coating film of 400 µm was formed by WET using an applicator, and cured at 140°C for 30 minutes. Thereafter, the gel fraction, the xylene rubbing test and the water resistance were evaluated.

**Table 5**

| | Ex. 14 | Ex. 15 | Ex. 16 | Ex. 17 |
|---|---|---|---|---|
| Polyol A | 100 | 100 | 100 | 100 |
| Ester compound N | 15 | | | |
| Ester compound O | | 18 | | |
| Ester compound P | | | 18 | |
| Ester compound Q | | | | 43 |
| PHS | 1.2 | 1.2 | 1.2 | 1.4 |
| Curing temperature/°C | 140 | 140 | 140 | 140 |
| Curing time/minutes | 30 | 30 | 30 | 30 |
| Gel fraction/% | ⊚ | ⊚ | ⊚ | ⊚ |
| Xylene rubbing | ⊚ | ⊚ | ⊚ | ⊚ |
| Water resistance | ⊚ | ⊚ | ⊚ | ○ |
| Rigid body pendulum | | | Fig. 5 | |

### Example 18

Phenolsulfonic acid (PHS) was mixed with a mixture of polyol A 100 parts and 15 parts of sebacic acid diethyl ester so as to be 2 wt% relative to the solid content of the mixture. A coating film of 400 µm was formed by WET using an applicator, and cured at 140°C for 30 minutes. Thereafter, the gel fraction, the xylene rubbing test and the water resistance were evaluated.

### Example 19

Phenolsulfonic acid (PHS) was mixed with a mixture of polyol A 100 parts and 15 parts of sebacic acid diisopropyl ester so as to be 2 wt% relative to the solid content of the mixture. A coating film of 400 µm was formed by WET using an applicator, and cured at 140°C for 30 minutes. Thereafter, the gel fraction, the xylene rubbing test and the water resistance were evaluated.

### Example 20

Phenolsulfonic acid (PHS) was mixed with a mixture of polyol A 100 parts and 18 parts of sebacic acid ditertiary butyl ester so as to be 2 wt% relative to the solid content of the mixture. A coating film of 400 µm was formed by WET using an applicator, and cured at 140°C for 30 minutes. Thereafter, the gel fraction, the xylene rubbing test and the water resistance were evaluated and the curability of the prepared liquid was confirmed by a rigid body pendulum test.

### Example 21

Phenolsulfonic acid (PHS) was mixed with a mixture of polyol A 100 parts and 12 parts of di-t-butyl malonate so as to be 2 wt% relative to the solid content of the mixture. A coating film of 400 µm was formed by WET using an applicator, and cured at 140°C for 30 minutes. Thereafter, the gel fraction, the xylene rubbing test and the water resistance were evaluated.

### Example 22

Phenolsulfonic acid (PHS) was mixed with a mixture of 100 parts of ACRYDIC A-405 (polyol resin manufactured by DIC Corporation) and 12 parts of di-t-butyl malonate so as to be 2 wt% relative to the solid content of the mixture. A coating film of 400 µm was formed by WET using an applicator, and cured at 140°C for 30 minutes. Thereafter, the gel fraction, the xylene rubbing test and the water resistance were evaluated.

**Table 6**

| | Ex. 18 | Ex. 19 | Ex. 20 | Ex. 21 | Ex. 22 |
|---|---|---|---|---|---|
| Polyol A | 100 | 100 | 100 | 100 | |
| A-405 | | | | | 100 |
| Sebacic acid diethyl ester | 15 | | | | |
| Sebacic acid diisopropyl ester | | 15 | | | |
| Sebacic acid ditertiary butyl ester | | | 18 | | |
| Di-t-butyl malonate | | | | 12 | 12 |
| PHS | 1.2 | 1.2 | 1.3 | 1.2 | 1.2 |
| Curing temperature/°C | 140 | 140 | 140 | 140 | 140 |
| Curing time/ minutes | 30 | 30 | 30 | 30 | 30 |
| Gel fraction/% | ⊚ | ○ | ⊚ | ⊚ | ⊚ |
| Xylene rubbing | × | × | ⊚ | ⊚ | ⊚ |
| Water resistance | × | × | ⊚ | ⊚ | ○ |
| Rigid body pendulum | | | Fig. 6 | | |

| | | | | | |
|---|---|---|---|---|---|
| A-405: ACRYDIC A-405 manufactured by DIC Corporation (acrylic polyol resin) | | | | | |

In Examples 14 to 22, it is obvious that the crosslinking reaction is efficiently performed by using the polyvalent ester compound as a crosslinking agent. Further, when the tertiary ester is used, the xylene rubbing and the water resistance are more improved, and the crosslinking reaction is more carried out.
Further, it is considered that the combination of the polyol resin as a polymer and the ester compound having a relatively low molecular weight works favorably for reactivity and compatibility, and the reaction efficiency is improved.

### Example 23

Hexane diol 8 parts was dissolved in 40 parts of Solfit and further mixed with 60 parts of ester compound A to obtain a mixture. Paratoluenesulfonic acid (PTS) was mixed with the mixture so as to be 2 wt% relative to the solid content of the mixture. A coating film of 400 µm was formed by WET using an applicator, and cured at 140°C for 30 minutes. Thereafter, the gel fraction, the xylene rubbing test and the water resistance were evaluated.

### Example 24

Trimethylolpropane (TMP) 20 parts was mixed with 100 parts of ester compound G and further phenolsulfonic acid (PHS) was mixed with the mixture so as to be 2 wt% relative to the solid content of the mixture. A coating film of 400 µm was formed by WET using an applicator, and cured at 140°C for 30 minutes. Thereafter, the gel fraction, the xylene rubbing test and the water resistance were evaluated.

### Example 25

Trimethylolpropane (TMP) 10 parts was mixed with 100 parts of ester compound K and further phenolsulfonic acid (PHS) was mixed with the mixture so as to be 2 wt% relative to the solid content of the mixture. A coating film of 400 µm was formed by WET using an applicator, and cured at 140°C for 30 minutes. Thereafter, the gel fraction, the xylene rubbing test and the water resistance were evaluated.

### Example 26

Hexanediol 14 parts was mixed with 100 parts of ester compound M and further paratoluenesulfonic acid (PTS) was mixed with the mixture so as to be 2 wt% relative to the solid content of the mixture. A coating film of 400 µm was formed by WET using an applicator, and cured at 140°C for 30 minutes. Thereafter, the gel fraction, the xylene rubbing test and the water resistance were evaluated.

**Table 7**

| | Ex. 23 | Ex. 24 | Ex. 25 | Ex. 26 |
|---|---|---|---|---|
| Ester compound A | 60 | | | |
| Ester compound G | | 100 | | |
| Ester compound K | | | 100 | |
| Ester compound M | | | | 100 |
| Hexanediol | 8 | | | 14 |
| Trimethylolpropane | | 20 | 10 | |
| Solfit | 40 | | | |
| PTS | 0.75 | | | 1.2 |
| PHS | | 1.3 | 1.2 | |
| Curing temperature/°C | 140 | 140 | 140 | 140 |
| Curing time/minutes | 30 | 30 | 30 | 30 |
| Gel fraction/% | ⊚ | ⊚ | ⊚ | ⊚ |
| Xylene rubbing | ⊚ | ⊚ | ⊚ | ○ |
| Water resistance | ○ | ⊚ | ⊚ | ○ |

In Examples 23 to 26, it is understood that even when a low molecular weight polyol is used as a crosslinking agent, crosslinking proceeds efficiently. By using a low molecular weight polyol having high water solubility, curing in a water-soluble solvent or water-borne system can be suitably performed.

The physical properties in the above tables 1 to 6 were measured by the following methods. The gel fraction was determined by dissolving the film obtained in Examples using Soxhlet for 30 minutes in acetone reflux, and measuring the residual weight% of the film as gel fraction. When the gel fraction was 0% to 40%, it was indicated as ×, which means a state that cannot withstand practical use. When the gel fraction was 40% to 80%, it was indicated as o, which means a state that can withstand practical use. When the gel fraction was 80% to 100%, it was indicated as ⊚, which means that the performance is excellent.

In xylene rubbing, the thermosetting resin of the example was coated on a PET film and rubbed 10 times with medicinal gauze impregnated with xylene, and the surface was observed.
Those that cannot withstand practical use were indicated as ×, those that can withstand practical use were indicated as o, and further those with excellent performance were indicated as ⊚.

For evaluation of water resistance, a mixed solution of a polymer, a crosslinking agent and a catalyst was applied to a glass plate, processed under each baking condition, and semi-dipped in warm water at 80°C. for 5 hours.
Those that cannot withstand practical use were indicated as x, those that can withstand practical use were indicated as o, and further those with excellent performance were indicated as ⊚.

### Rigid body pendulum tester

Using a rigid body pendulum tester (model number RPT-3000 W) manufactured by A & D Corporation, the temperature was raised up to each temperature (140°C, 170°C) at a heating rate of 10°C/min. and held. And the change in the period and the logarithmic damping ratio was obtained. In particular, it was used to check the cured state of the coating film.
Pendulum: FRB-100
Film thickness (WET): 100 µm

When the gel fraction is 40 or more, it is judged that a certain curing reaction occurs, and it is obvious that it has a function as a curable resin composition. Those having excellent properties in xylene rubbing and water resistance are also suitable for use in many applications including coatings (especially coatings forming the outermost layer) based on these properties. When the performance such as xylene rubbing and water resistance is not important, the curable resin composition of the present invention can be used in the fields of pressure sensitive adhesives and adhesives and in the inner layer of multilayer coating films.

From the results of the above examples, it was revealed that the thermosetting resin composition of the present invention has excellent effect performance at low temperature. There are various combinations for performing curing, and two or more of these reaction systems can be combined. Therefore, it is obvious that it can suitably be used in applications such as coatings and adhesives.

### INDUSTRIAL APPLICABILITY

The thermosetting resin composition of the present invention can be used as a cured film as various coating compositions, adhesive compositions, and pressure sensitive adhesive compositions.

## Claims

1. A thermosetting resin composition which comprises an ester compound having two or more alkyl ester groups in a molecule (A), a compound having two or more hydroxyl groups in a molecule (B), and a transesterification catalyst (C).

2. The thermosetting resin composition according to claim 1, wherein the ester compound (A) is a compound having two or more alkyl ester groups or a homo-or copolymer of a monomer having an alkyl ester.

3. The thermosetting resin composition according to claim 1, wherein the ester compound (A) is a carboxylic acid ester.

4. The thermosetting resin composition according to claim 1, 2, or 3, which is solventless, powdery, solvent-type, or water-borne.

5. A cured film formed by three-dimensionally crosslinking the thermosetting resin composition according to claim 1, 2, 3, or 4.
